(19) Europäisches Patentamt

European Patent Office

Office européen des brevets

(11) **EP 1 617 205 A1**

(12) **EUROPÄISCHE PATENTANMELDUNG**

(43) Veröffentlichungstag:
**18.01.2006 Patentblatt 2006/03**

(51) Int Cl.:
*G01N 21/64* (2006.01)   *G02B 21/00* (2006.01)
*G02B 21/16* (2006.01)   *G01J 3/44* (2006.01)

(21) Anmeldenummer: **04023511.1**

(22) Anmeldetag: **01.10.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **16.07.2004   DE 102004034977**

(71) Anmelder: **Carl-Zeiss Jena GmbH**
**07745 Jena (DE)**

(72) Erfinder:
• **Funk, Jörg-Michael**
 **07743 Jena (DE)**
• **Steinert, Jörg**
 **07743 Jena (DE)**
• **Wolleschensky, Ralf**
 **99510 Apolda (DE)**

(54) **Lichtrastermikroskop und Verwendung**

(57) Bei einem konfokalen Laserscanningmikroskop zur Raman- Spektroskopie mit einer Beleuchtungsanordnung (2), die einen Beleuchtungsstrahl zum Beleuchten eines Probenbereichs (23) bereitstellt, einer Scananordnung (3, 4), die den Beleuchtungsstrahl scannend über die Probe führt, und einer Detektoranordnung (5), die über die Scananordnung (3, 4) den beleuchteten Probenbereich (23) mittels einer konfokalen Blende (26) auf mindestens eine Detektoreinheit (28) abbildet ist vorgesehen, daß die Beleuchtungsanordnung (2) der Scananordnung (3, 4) einen linienförmigen Beleuchtungsstrahl bereitstellt, die Scananordnung (3, 4) den linienförmigen Beleuchtungsstrahl scannend über die Probe f führt und die konfokale Blende als Schlitzblende (26) oder als konfokale Blende wirkender schlitzförmiger Bereich (28, 48) der Detektoreinheit (28) ausgebildet ist.

EP 1 617 205 A1

**Beschreibung**

Die Erfindung bezieht sich auf ein konfokales Laserscanningmikroskop mit einer Beleuchtungsanordnung, die einen Beleuchtungsstrahl zum Beleuchten eines Probenbereichs bereitstellt, einer Scananordnung, die den Beleuchtungsstrahl scannend über die Probe führt, und einer Detektoranordnung, die über die Scananordnung den beleuchteten Probenbereich mittels einer konfokalen Blende auf mindestens eine Detektoreinheit abbildet.

Konfokale Laserscanningmikroskope der eingangs genannten Art sind im Stand der Technik bekannt, beispielhalber sei hierzu auf die DE 197 02 753 A1 verwiesen. In jüngster Zeit wurden vermehrt mikroskopische Aufbauten, insbesondere konfokal abbildende Laserscanningmikroskope, für spektroskopische Aufnahmetechniken eingesetzt. Auf diese Weise ist es möglich, die spektroskopischen Eigenschaften eines ausgewählten Probenbereichs zerstörungs- und berührungslos zu vermessen. Die konfokale optische Mikroskopie ermöglicht dabei die selektive Detektion optischer Signale, welche innerhalb eines beugungsbegrenzten Konfokalvolumens erzeugt werden, dessen Größe im Mikrometerbereich liegt. Laserscanningmikroskope mit abtastenden Laserstrahlen und/oder Probenvorschubeinheiten können mit hoher Ortsauflösung zwei- oder dreidimensionale Darstellungen der untersuchten Probe erzeugen. Durch diese Eigenschaft hat sich die konfokale Laserscanningmikroskopie für fluoreszierende Proben im biomedizinischen Bereich nahezu als Standard durchgesetzt.

Aufgrund des hohen chemischen Aussagegehaltes ist aus applikativer Sicht insbesondere die konfokale Raman-Mikroskopie sehr attraktiv. Die EP 0 542 962 B1 beschreibt einen Aufbau zur konfokalen Raman-Mikroskopie, bei der geeignetes Auslesen eines ortsauflösenden Flächendetektors zur Herstellung der Konfokalitätsbedingung verwendet wird.

Ein Problem der Raman-Spektroskopie im Vergleich zur klassischen Fluoreszenz-Spektroskopie besteht in den häufig um mehrere Größenordnungen geringeren Signalintensitäten. Die Integrationszeit pro Meßpunkt beträgt in der Praxis häufiger mehr als 1 Minute. Daraus resultieren Meßzeiten von oftmals vielen Stunden oder Tagen, was einer konfokalen Raman-Mikroskopie für die Aufnahme zwei- oder dreidimensionaler mikroskopischer Bilder mit hoher Punktdichte naturgemäß enge Grenzen setzt. Eine Verringerung der Integrationszeit wäre zwar theoretisch durch Erhöhung der Laserleistung denkbar, jedoch führt dies schnell zur Probenzerstörung.

Vor ähnlichen Problemen steht man im Bereich der nicht-linearen optischen Mikroskopie, die z. B. mit der Second Harmonic Generation attraktive Kontrastierungsmethoden anbietet, deren praktischer Einsatz jedoch ebenfalls durch geringe Signalintensitäten und damit verbundene lange Meßzeiten stark begrenzt ist.

Aus der US 6.134.002 ist ein konfokaler Mikroskopaufbau bekannt, bei dem als Detektor ein Spektralanalysator eingesetzt wird. Der Analysator nimmt Strahlung in einem Eintrittsspalt auf, wobei der linienförmige Spaltbereich einem Linienbereich auf der Probe entspricht. Es wird ein Punktbild auf der Probe gescannt. Die zu detektierende Strahlung wird zum Analysator über einen als Hauptfarbteiler wirkenden Strahlteiler ausgekoppelt, welcher entweder zwischen zwei Scanspiegeln einer Scaneinheit liegt oder in Richtung auf die Probe gesehen der Scaneinheit vorgeordnet ist. In der erstgenannten Variante ist das durch die zwei Scanspiegel gescannte Punktbild auf der Probe nur in einer Raumrichtung descannt, so daß der Spektralanalysator mit längs einer Zeile gescannter Strahlung beaufschlagt wird. In der zweiten Variante ist die Strahlung durch die Scanspiegel vollständig descannt und somit ruhend und wird deshalb nach einem Pinhole mit einer Zylinderoptik nochmals aufgeweitet. Der aus US 6.134.002 bekannte Aufbau erreicht eine Beschleunigung der Bildaufnahme durch Verkürzung der Spektralanalysezeiten, weshalb er zwingend auf einen Spektralanalysator mit schlitzförmigem Eingangsbereich als Detektor angewiesen, also hinsichtlich der Vielfalt möglicher Detektoren stark eingeschränkt ist. Die eingangs genannte Problematik hinsichtlich einer möglichen Probenbeschädigung durch hohe Laserleistung ist auch bei einem Aufbau nach US 6.134.002 gegeben.

Der Erfindung liegt deshalb die Aufgabe zugrunde, ein Laserscanningmikroskop so weiterzubilden, daß es auch spektroskopische Signale geringer Intensität in möglichst kurzer Zeit aufnehmen kann.

Diese Aufgabe wird erfindungsgemäß mit einem konfokalen Laserscanningmikroskop der eingangs genannten Art gelöst, bei dem die Beleuchtungsanordnung der Scananordnung einen linienförmigen Beleuchtungsstrahl bereitstellt, die Scananordnung den linienförmigen Beleuchtungsstrahl scannend über die Probe führt und die konfokale Blende als Schlitzblende oder als konfokale Blende wirkender schlitzförmiger Bereich der Detektoreinheit ausgebildet ist.

Die vorliegende Erfindung widmet sich der beschriebenen Problematik durch Kombination einer linienförmigen Probenbeleuchtung und einer konfokalen Detektion mittels einer Schlitzblende oder eines als Schlitzblende wirkenden Bereiches. Im Gegensatz zu Punktscannern, wie sie die US 6.134.002 verwendet, wird also ein linienförmiger Bereich auf der Probe beleuchtet und konfokal auf einen zumindest linienförmigen Detektor abgebildet.

Verglichen mit einem konfokalen, herkömmlichen Punkt-Laserscanningmikroskop ist bei gleicher Bildaufnahmezeit, bei gleicher in der Probe abgebildeter Fläche, bei gleichem Sehfeld und bei gleicher Laserleistung pro Pixel ein um einen Faktor $\sqrt{n}$ verbessertes Signal/Rausch-Verhältnis realisiert, wenn man mit n die Anzahl der Pixel in der Detektorzeile bezeichnet. Hierfür ist ein Wert von 500 bis 2.000 typisch. Die Voraussetzung hierzu ist, daß die die Probe beleuchtende Linie die n-fache Leistung, eines Laserfokus eines vergleichbaren konfokalen Punktscanners aufweist.

Möchte man mit dem erfndungsgemäßen Laserscanningsmikroskop nicht die Detektionsgeschwindigkeit bzw. das Signal/Rausch-Verhältnis verbessern, kann alternativ im Vergleich zum konfokalen Punktscanner bei gleicher Bildaufnahmezeit und gleichem Signal/Rausch-Verhältnis die Strahlenbelastung der Probe um den Faktor n gesenkt werden, wenn die für einen konfokalen Punktscanner punktförmig aufgebrachte Strahlungsleistung nun auf die Beleuchtungslinie verteilt wird.

Das zeilenabtastende Laserscanningmikroskop ermöglichst also im Vergleich zum konfokalen Punktscannern, intensitätsschwache Signale empfindlicher Probensubstanzen bei gleichen Signal/Rausch-Verhältnis und gleicher Pro

benbelastung um den Faktor n schneller, bei gleicher Aufnahmezeit mit einem um den Faktor $\sqrt{n}$ verbesserten Signal/Rausch-Verhältnis oder bei gleiche Aufnahmezeit mit gleichem Signal/Rausch-Verhältnis und einer um den Faktor n geringeren Probenbelastung abzubilden.

Je nach gewünschter Auflösung wird man eine unterschiedlich breite Linie auf der Probe beleuchten und konfokal detektieren wollen. Eine veränderliche Beleuchtung ist deshalb bevorzugt. Dies kann prinzipiell bereits bei der Erzeugung der linienförmigen Beleuchtung bewirkt werden. Da die Erzeugung einer linienförmigen Beleuchtung jedoch in einem Laserscanningmikroskop zweckmäßigerweise in einem Beleuchtungsmodul erfolgt, kann der Aufwand für eine Verstellbarkeit relativ groß werden, wenn im Beleuchtungsmodul Strahlung aus unterschiedlichen Strahlquellen zusammengeführt wird. Es ist deshalb bevorzugt, eine Zoomoptik zu verwenden, welche eine Zoomfunktion realisiert werden dazu die Linienbreite eines bereits erzeugten linienförmigen Beleuchtungsstrahls variiert und welche vorzugsweise in einem Bereich des Strahlengangs liegt, in dem Beleuchtungsstrahlung und zu detektierende Strahlung durch dieselben optischen Elemente geführt werden, d. h. noch nicht separiert sind. Bei Laserscanningmikroskopen kann der abgetastete Bildbereich durch geeignete Ansteuerung des Scanners in einer Zoomfunktion ausgewählt werden, allerdings nur bei Einzelpunktabtastung in Kombination mit einem Galvanometerscanner. Bei den hier vorliegenden parallel scannenden, d. h. mehrere Punkte gleichzeitig abtastenden Laserscanningmikroskopen ist eine Zoomfunktion durch Verstellung der Scananordnung nicht realisierbar, da die einzelnen abgetasteten Punkte der Linie in einem festen geometrischen Verhältnis zueinander stehen. Die durch die Zoom-Optik erreichte variable Vergrößerung ermöglicht eine Größenverstellung des abgescannten Feldes für solche parallel arbeitende Multipunktscanner, bei denen eine Zoomfunktion durch Eingriff an der Scananordnung aufgrund der festen geometrischen Beziehung der parallel über die Probe geführten Punkte nicht möglich ist. Der für einzelpunktabtastende konfokale Raster-Mikroskope an und für sich bekannte Ansatz, die Ablenkeinrichtung so anzusteuern, daß ein Bildfeld in gewünschter und einstellbarer Größe abgetastet wird, ist bei solchen parallel abtastenden Systemen ebensowenig möglich, wie bei Systemen, die mit Resonanzscannern, d. h. in Resonanzschwingung angetriebenen Drehspiegeln, arbeiten, da dort die maximale Auslenkung so gut wie nicht verstellbar ist.

Eine möglich Lage für die Zoomoptik ist direkte Vorordnung zur Scannereinheit (auf die Probe hin gesehen). Eine vorzugsweise motorisiert angetriebene Zoomoptik ermöglicht über eine Anpassung des von ihr bewirkten Zoom-Faktors, das diagonale Sehfeld in einem bestimmten Verstellbereich kontinuierlich zu variieren. Besonders bevorzugt ist eine Zoomoptik, die in drei optischen Freiheitsgraden verstellbar ist, so daß bei Variation der Linienbreite wichtige Parameter wie Fokuslage, Pupillenlage und Abbildungsmaßstab unverändert bleiben.

Ein Objektiv erreicht dann seine maximale Auflösung, wenn die Eintrittspupille vollständig ausgeleuchtet ist. Es ist deshalb zweckmäßig, geeignete Mittel vorzusehen, daß die Zoom-Optik die Eintrittspupille des Objektives immer vollständig ausleuchtet, unabhängig von der Einstellung der Zoom-Optik. Eine zweckmäßige Weiterbildung der Erfindung sieht folglich vor, daß in der Austrittspupille der Zoom-Optik ein als Blende wirkendes Element angeordnet ist, das nicht größer ist, als die kleinste Austrittspupillengröße, die im Betrieb der Zoom-Optik auftritt. Dadurch ist eine von der Einstellung der Zoom-Optik unabhängige Größe der Eintrittspupille bewirkt. Zweckmäßigerweise ist diese Größe gleich oder kleiner als die Größe der Objektiv-Eintrittspupille.

Im Betrieb der Zoom-Optik kann bei Einstellung einer Vergrößerung kleiner 1,0 die Austrittspupille sehr klein werden. Möchte man diese geringe Austrittspupillengröße als untere Grenze für die Auslegung vermeiden, ist es zweckmäßig, der Zoom-Optik ein Teleskop vorzuschalten, das eine entsprechende Pupillenaufweitung bewirkt. Zweckmäßigerweise wird man dieses Teleskop im Strahlengang nur dann aktivieren, wenn die Zoomoptik verkleinernd wirkt. Die Begriffe "vergrößern" und "verkleinern" sind hier auf die Abbildung der Probe bezogen.

Die Aktivierung dieses Teleskopes stellt sicher, daß die Ausgangspupille des Zooms, die bei einer Vergrößerung von 1,0 gegeben ist, als untere Grenze bei der Auslegung zugrundegelegt werden kann, ohne daß bei verkleinernder Wirkung der Zoom-Optik die Ausgangspupille so klein würde, daß möglicherweise die Objektivpupille unterfüllt wird. Bedingt durch die Austauschbarkeit des Objektives ist es zweckmäßig, das als Blende wirkende Element austauschbar zu gestalten, möchte man bewußt die Objektivpupille unterfüllen, d. h. nicht vollständig ausleuchten. Als Element kommt dann beispielsweise eine verstellbare Irisblende oder ein Mechanismus mit verschiedenen austauschbaren Blenden, beispielsweise ein Blendenrad mit verschiedenen Lochblenden in Frage.

In einer besonders kompakt bauenden Ausführungsform ist das als Blende wirkende Element durch die Scaneinheit realisiert; zum Beispiel kann die begrenzte Ausdehnung von Scannerspiegeln als Blende wirken.

In einer besonders bevorzugten Ausführungsform der Erfindung wird also eine Zoom-Optik verwendet, welche eine ausgangsseitige Pupille aufweist, in der eine Blende vorgesehen ist. In der Praxis kann diese Blende auch durch die Begrenzung einer Spiegelfläche der Scannereinheit realisiert sein. Durch die Wirkung dieser ausgangsseitigen Blende der Zoom-Optik wird unabhängig vom Verstellen der Zoom-Vergrößerung immer eine festgelegte Pupillengröße auf die Scananordnung bzw. auf das Objektiv des konfokalen Laserscanningmikroskop abgebildet. Vorteilhafterweise verhindert die Blende zusätzlich das Auftreten von ungewolltem Streulicht im Bereich der Scananordnung.

Möchte man auch Zoom-Faktoren kleiner Eins einstellen, ist es zur Pupillenfüllung vorteilhaft, das Zylinderteleskop vorzuschalten. Vorzugsweise erfolgt dieses Einschalten automatisiert, beispielsweise in Form eines Einschwenkvorgangs. Dadurch ist verhindert, daß die ausgangsseitige Pupille, beispielsweise die erwähnte Blende des Zoom-Objektivs unterstrahlt wird. Unabhängig von der Verstellung der Zoom-Optik ist somit am Ort der Objektivpupille stets eine Beleuchtungslinie einstellbarer Größe vorhanden, so daß Probenbereiche einstellbarer Größe untersucht werden können.

Beim Aktivieren des Zylinderteleskopes tritt unvermeidlich ein Bildhelligkeitssprung auf, da zum einen das Zylinderteleskop Strahlung absorbiert und zum anderen vor allem die Strahlungsintensität über eine nun längere Linie verteilt wird. Um für den Betrachter diese Wirkung auszugleichen, ist es in einer vorzugsweisen Weiterbildung vorgesehen, daß eine Steuereinrichtung bei in den Strahlengang geschaltetem Zylinderteleskop durch Verstellung eines Verstärkungsfaktors der Detektoranordnung oder der Scangeschwindigkeit der Scaneinrichtung eine durch das Zylinderteleskop bedingte Bildhelligkeitsminderung ausgleicht. Zweckmäßigerweise wird diese Änderung, die von der Steuereinrichtung vorgenommen wird, dem Benutzer angezeigt, beispielsweise durch entsprechende Umschaltung von Reglern eines Bedienprogrammes.

Die Erfinder erkannten, daß die Problematik einer axial variierenden Lage der (in Beleuchtungsrichtung gesehen) Eintrittspupille des Mikroskopobjektives überraschenderweise durch geeignete Gestaltung der Zoom-Optik gelöst werden kann. Vorteilhafterweise wird die Zoomoptik also so ausgebildet, daß sie die Abbildungslänge (Abstand zwischen Eintritts- und Austrittspupille der Zoom-Optik) variierbar gestaltet, wodurch Schwankungen der axialen Pupillenlage der Eintrittspupille des Mikroskopobjektives ausgleichbar sind. Die erfindungsgemäße Zoom-Optik erreicht also eine Doppelfunktion, indem zum einen die Scanfeldgröße durch Variation der Vergrößerung eingestellt werden kann, und zum anderen die Übertragungslänge so einstellbar ist, daß eine axial variierende Pupillenlage des Mikroskopobjektives ausgeglichen ist.

Es ist weiter zweckmäßig, daß die Zoom-Optik von einer Steuereinheit angesteuert so verstellbar ist, daß in einer ersten Betriebsart die variable Abbildungslänge realisiert ist. Um die Zoom-Optik auf ein aktiviertes, z. B. eingeschwenktes Objektiv anzupassen, ist es zweckmäßig, in dieser Betriebsart die Vergrößerung konstant zu halten.

Wurde die Einstellung der Pupillenlage vorgenommen, kann man vorteilhafterweise eine weitere Betriebsart verwirklichen, in der für die Ausführung einer Zoomfunktion die Vergrößerung unter Ansteuerung durch die Steuereinheit verstellt wird, ohne daß Abbildungslänge variiert. Durch die Wirkung der Zoom-Optik in dieser Betriebsart kann das abgetastete Feld hinsichtlich seiner Größe verstellt werden. Verwendet man gleichzeitig eine zweiachsig ansteuerbare Scaneinheit, kann zusätzlich und abhängig vom Verstellen der Zoomvergrößerung ein beliebiger Bereich innerhalb des maximal zulässigen Scanfeldes als sogenannten "region of interest" ausgewählt werden, wobei diese "region of interest" nicht symmetrisch zur optischen Achse liegen muß. Im Detektionsstrahlengang wird dieser Versatz ebenso wie die Zoomvergrößerung in Richtung auf den Detektor hin wieder aufgehoben, wodurch die Beobachtung spezifischer Bereiche in einer Probe möglich ist. Darüber hinaus kann man Bilder aus verschiedenen "region of interest" gewinnen und anschließend zu einem besonders hochaufgelösten Bild zusammensetzen.

Eine besonders zweckmäßige Bauweise der Zoom-Optik setzt vier Optikgruppen ein, um die variable Pupillenabbildung auszuführen. Es ist dann für die Herstellung günstig, die vier Optikgruppen in Beleuchtungsrichtung gesehen mit positiver Brechkraft, negativer Brechkraft sowie zweimal positiver Brechkraft zu versehen. Zweckmäßigerweise sind zumindest drei Optikgruppen unabhängig voneinander mittels Antrieben verstellbar, und die Bewegung erfolgt derart, daß die Fokussierung von unendlich nach unendlich erhalten bleibt und je nach Betriebsart die Vergrößerung bzw. Abbildungslänge (Pupillenlage) verstellt wird. Auch kann es vorteilhaft sein, die in Beleuchtungsrichtung gesehen letzte Gruppe mit einem üblicherweise in einem konfokalen Raster-Mikroskop der Scaneinheit vorgeordneten Scanobjektiv als eine Einheit auszubilden. Jede Gruppe besteht vorzugsweise mindestens aus einer Linse. Um möglichst gute Eigenschaften bezüglich des verfügbaren Spektralbereiches sowie die möglichen Aperturen/Feldwinkel zu erreichen, sind die Gruppen bezüglich der Abbildungsfehler vorzugsweise in sich selbst korrigiert.

Die erwähnte Auswahl einer "region of interest" entweder nur durch die vom Zoom-Objektiv realisierte Zoomfunktion oder auch zusätzlich durch eine im möglichen Scanfeld asymmetrische Scannerbetriebsweise kann zusätzlich noch durch Verwendung eines den Strahlengang drehenden Elementes verbessert werden. Setzt man in eine Pupille des Beleuchtungsstrahlenganges beispielsweise ein Abbe-König-Prisma, kann das abgetastete, gezoomte Scanfeld gedreht werden. Im Detektionsstrahlengang wird diese Verdrehung durch das Prisma wieder aufgehoben. Ein solches Abbe-König-Prisma ist beispielsweise von LINOS Photonics, Deutschland, erhältlich und ist im Stand der Technik bekannt. Es wird für die erwähnte Bauweise drehbar im Strahlengang nahe einer Pupille angeordnet, da hier die Strahlbündel am engsten zusammengeführt sind und deshalb ein besonders kleines Prisma verwendet werden kann. Es führt je nach Drehwinkel eine Rotation um den doppelten Winkel des Bildfeldes ein.

Die linienförmige Beleuchtung kann auf vielfältige Art und Weise erzeugt werden. Besonders vorteilhaft ist jedoch der Einsatz mindestens eines asphärischen Spiegels. Das Grundprinzip der Strahlformung in der Beleuchtungsvorrichtung ist es dann, mittels eines asphärischen Spiegels eine Energieumverteilung zumindest in einer Schnittebene vorzunehmen und ein inhomogenes, insbesondere Gauß-verteiltes Profil so umzuwandeln, daß in der Schnittebene eine weitgehend homogene Energieverteilung vorliegt. Bildet man den Spiegel in zwei Querschnittsrichtungen asphärisch aus, erhält man eine Homogenisierung in zwei Schnittebenen, also ein homogenisiertes Feld. Durch den Einsatz eines asphärischen Spiegels kann eine große spektrale Bandbreite für die Beleuchtungsstrahlung abgedeckt werden, bei gleichzeitiger homogener Ausleuchtung. Dabei wurde erkannt, daß die reflektierende Asphäre, die in einer Schnittebene im Bereich des Auftreffpunktes des Ursprungsstrahls stärker gekrümmt ist als in auftreffpunktfernen Bereichen, geeignet ist, eine Wellenlängenabhängigkeit bei Fokussierung und Energieumverteilung vermeidet, wobei gleichzeitig das Konzept der variierenden Krümmung des asphärischen Spiegels eine große Vielfalt an Energieumverteilungen eröffnet. Mit der Beleuchtungsvorrichtung lassen sich Gaußbündel beispielsweise derartig umformen, daß in über 80% des ausgeleuchteten Bereiches die Intensität nicht unter 80% des Maximalwertes fällt. Dies ist eine im wesentlichen homogene Verteilung im hier relevanten Sinne.

Eine Variante mit zweiachsiger asphärischer Krümmung kann besonders vorteilhaft zur Homogenisierung in einer Zwischenbildebene zum Einsatz kommen. Bei multipunktscannenden Mikroskopen ermöglicht die homogene Ausleuchtung eines Zwischenbildes vor dem Element, das die Punktwolke erzeugt (z.B. Nipkow-Scheibe), eine gleichmäßige Ausleuchtung der Probe mit örtlich im wesentlichen einheitlicher Strahlintensität. Auch ermöglicht die Konvertierungseinheit die volle Ausleuchtung einer Objektivpupille, so daß eine besonders gute (hoch aufgelöste) Abbildung erreicht wird, da eine homogen gefüllte Pupille die optische Auflösung auszuschöpfen erlaubt.

Eine besonders einfach zu fertigende Ausführungsform ist ein Spiegel, der keilförmig und mit abgerundetem First ausgebildet ist. Ein solcher Spiegel kann auf einfache Weise aus einem Quader hergestellt werden und erzielt eine Brennlinie mit homogener Energieverteilung.

In einer mathematisch besonders einfach zu beschreibenden Variante wird der Spiegel durch eine konische Konstante sowie den Abrundungsradius des Firstes definiert und genügt in (x,y,z)-Koordinaten hinsichtlich der z-Koordinate der Gleichung $y^2/[c + (c^2 - (1 + Q)y^2)^{1/2}]$, wobei c der Abrundungsradius des Firstes und Q die konische Konstante ist.

Für die zeilenförmige Beleuchtung möchte man die Strahlung nicht nur homogen entlang einer längserstreckten Linie verteilen, sondern gegebenenfalls auch die Weite der Linie an den Durchmesser der Eintrittspupille des nachfolgenden optischen Systems anpassen. Um dies zu erreichen, muß der asphärische Spiegel auch eine Strahlaufweitung quer zur Linienrichtung bewirken. Dies kann bei der eingangs genannten Variante eines keilförmigen Spiegels mit abgerundetem First besonders einfach dadurch erreicht werden, daß die Spiegelfläche oder zumindest der First entlang der First-Längsachse sphärisch oder asphärisch gekrümmt ist.

Der asphärische Spiegel mit abgerundetem First ist also dann zweidimensional gekrümmt, wobei in einer ersten Schnittrichtung (senkrecht zur Längsachse) ein Kegel mit abgerundeter Spitze, in einer zweiten Schnittrichtung (längs des Firstes) eine parabolische, sphärische oder asphärische Krümmung vorliegen kann. Letztere Krümmung stellt dann die Breite des ausgeleuchteten Feldes ein, wohingegen die asphärische Form senkrecht zur Längsachse die Aufweitung längs des Feldes bewirkt und aufgrund der Asphärizität eine Energieumverteilung zur Folge hat. Längs des Feldes ist damit eine weitgehend homogene Energieumverteilung erreicht.

Ein zusätzlich längs des Firstes sphärisch oder parabolisch gekrümmter Spiegel läßt sich in einer einfachen mathematischen Beschreibung wie folgt fassen: $f(x, y) = \sqrt{(a(y) - r_x)^2 - x^2} - r_x$, wobei $r_x$ der Krümmungsradius entlang des Firstes, d. h. in der oben genannten zweiten Schnittrichtung ist.

Um bei dem in zwei Richtungen gekrümmten Spiegel (z. B. in der ersten Schnittrichtung asphärisch, in der zweiten sphärisch) eine Anpassung zur vollen Ausleuchtung eines Zwischenbildes oder einer Eintrittspupille eines nachfolgenden optischen Systems zu bewirken, ist es zweckmäßig, dem Spiegel eine Sammeloptik, z. B. in Form eines Sammelspiegels, nachzuordnen. Üblicherweise wird man für die Erzeugung eines rechteckigen Feldes dabei einen zylindrischen oder torischen Sammelspiegel einsetzen. Für andere Feldformen mag die Spiegelform abweichen, so kann man beispielsweise auch für diesen zweiten Spiegel die genannte Asphäre verwenden, um eine Kombination aus Homogenisierung der Pupillenfüllung in einer ersten Richtung (durch eine der Asphären) und des Zwischenbildes in der verbleibenden Richtung (durch die andere Asphäre) zu erreichen. Auch kann durch die zusätzliche Asphäre eine Bildfehlerkompensation bewirkt werden. Natürlich kann man die zweite Asphäre auch zusätzlich zum Sammelspiegel vorsehen.

Für die Ausführungsform des asphärischen Spiegels mit spährischer Krümmung in der zweiten Schnittebene ist es deshalb bevorzugt, daß der Sammelspiegel in x-Richtung einen Krümmungsradius gleich $r_x + 2 \cdot d$ aufweist, wobei d der Abstand zwischen asphärischem Spiegel und Sammelspiegel ist. Der Krümmungsradius $r_x$ des asphärischen Spiegels in der zweiten Schnittebene skaliert dann direkt die Höhe des ausgeleuchteten rechteckigen Feldes bzw. des Profils des Beleuchtungsstrahls.

Natürlich kann zur homogenen Pupillenausleuchtung auch ein in beiden Schnittrichtungen asphärischer Spiegel verwendet werden. Bei einer rotationssymmetrischen Asphäre bewirkt dies dann ein homogen ausgeleuchtetes Kreisfeld; ansonsten erhält man ein elliptisches Feld. Aus der derart beleuchteten Pupille kann man dann für ein scannendes Verfahren einzelne Bereiche auswählen und verwenden, z. B. mittels Nipkow-Scheiben, Schlitzblenden o. ä.

Zur Ausleuchtung des asphärischen Spiegels ist es vorteilhaft, die Symmetrieachse des Spiegels unter einem Winkel zwischen 4° und 20° zur Einfallsachse des Ursprungsstrahles, der z. B. gaußförmig profiliert ist, zu legen, da dann ein kompakter Aufbau erhalten werden kann. Der nachgeordnete Sammelspiegel, der beispielsweise zylindrisch oder torisch ausgebildet sein kann, sammelt die von der Asphäre umverteilte Strahlungsenergie und kompensiert während der Propagation auflaufende Wellenaberrationen. Spielen solche Wellenaberrationen in einfachen Fällen keine Rolle, kann anstelle des Sammelspiegels auch eine sphärische Linse verwendet werden.

Vorzugsweise wird im Laserscanningmikroskop mittels einer zweiten optionalen unabhängig wirkenden Scaneinrichtung eine dezentrale Zoom-Funktion, d. h. Crop-Funktion realisiert.

Die konfokale Abbildung kann im Laserscanningmikroskop durch eine Schlitzblende bewirkt werden. Bevorzugt ist eine Schlitzblende, die hinsichtlich ihrer Schlitzbreite kontinuierlich verstellt werden kann, um einen beliebigen Airy-Durchmesser am Detektor zu erzeugen. Die kontinuierliche Verstellung kann beispielsweise mittels Festkörpergelenk-Technologie realisierter Schlitzblenden erreicht werden. Alternativ kann auch eine Schlitzblendeneinheit mit mehreren austauschbaren Schlitzblenden unterschiedlicher Schlitzbreite verwendet werden. Beispielsweise kann man feste Spaltblenden, z. B. strukturierte Chrommasken, unterschiedlicher Breite auf einem Schieber anordnen.

In einer besonders einfach zu realisierenden Lösung wirkt die Detektoreinheit selbst als Schlitzblende. Dazu kann beispielsweise eine Detektorzeile mit Pixeln in einer Reihe verwendet werden. Auch ist es möglich, daß die Detektoreinheit einen quer zur Schlitzrichtung ortsauflösenden Flächenstrahlungssensor umfaßt, der in der konfokalen Ebene angeordnet ist, wobei die Auswahl eines Teilbereichs des Flächenstrahlungssensors als konfokale Schlitzblende wirkt. Auf diese Weise kann der Effekt einer Variation des Schlitzblenden-Durchmessers durch eine entsprechende Auswahl des Auslesebereiches am Sensor, beispielsweise einem CCD- oder CMOS-Detektor-Array, realisiert werden.

Im Laserscanningmikroskop können natürlich verschiedenste spektrale Kanäle sowohl bei der Beleuchtung als auch bei der Detektion verwendet werden. Es ist diesbezüglich eine besonders große Vielfalt möglich, wenn die Scananordnung mittels eines Hauptfarbteilers die eingestrahlte Beleuchtungsstrahlung von vom Probenbereich zurückkehrender Strahlung trennt, wobei der Farbteiler der als Streifenspiegel gemäße der DE 102 57 237 A1, deren Offenbarungsgehalt hier explizit eingebunden wird, realisiert sein kann.

Ein solcher Streifenspiegel wirkt als spektral unabhängiger Hauptfarbteiler. Er liegt in einer Pupillenebene der Scananordnung, in der in der Probenebene reflektierte, d. h. kohärente Beleuchtungsstrahlung linienförmig abgebildet ist. Inkohärente, zu detektierende Signalstrahlung füllt dagegen die gesamte Pupillenebene aus und wird durch den schmalen Streifenspiegel nur unwesentliche abgeschwächt. Der Begriff "Farbteiler" umfaßt also auch nichtspektral wirkende Teilersysteme. Anstelle des beschriebenen spektral unabhängigen Farbteilers kann auch ein homogener Neutralteiler (z.B. 50/50, 70/30, 80/20 o.ä.) oder ein dichroitischer Teiler Verwendung finden.

Damit applikationsabhängig eine Auswahl möglich ist, ist der Hauptfarbteiler vorzugsweise mit einer Mechanik versehen, die einen einfachen Wechsel ermöglicht, beispielsweise durch ein entsprechendes Teilerrad, das einzelne, austauschbare Teiler enthält.

Ein dichroitischer Hauptfarbteiler ist besonders dann vorteilhaft, wenn kohärente, d. h. gerichtete Strahlung detektiert werden soll, wie z.B. Reflexion, Stokes'sche bzw. anti-Stokes'sche Raman-Spektroskopie, kohärente Raman-Prozesse höherer Ordnung, allgemein parametrische nicht-lineare optische Prozesse, wie Second Harmonic Generation, Third Harmonic Generation, Sum Frequency Generation, Zwei- und Mehrfotonenabsorption bzw. Fluoreszenz. Mehrere dieser Verfahren der nicht-linearen optischen Spektroskopie erfordern den Einsatz zweier oder mehrer Laserstrahlen, die kollinear überlagert werden. Hierbei erweist sich die dargestellte Strahlvereinigung der Beleuchtungsstrahlung aus mehreren Lasern als besonders vorteilhaft. Grundsätzlich können die in der Fluoreszenzmikroskopie weitverbreiteten dichroitischen Strahlteiler verwendet werden. Auch ist es für Raman-Mikroskopie vorteilhaft, vor den Detektoren holografische Notch-Teiler oder -Filter zu Unterdrückung eines Rayleigh-Streuanteils zu verwenden.

Bei Detektion mit mehreren separaten spektralen Kanälen wird die Signalstrahlung mit Hilfe eines Nebenfarbteilers in spektrale Anteile separiert, wobei jeder Nebenfarbteiler einen zusätzlichen Spektralkanal bereitstellt. Die einzelnen spektralen Anteile werden dann mit Hilfe von Rund- und/oder Zylinderoptiken auf den zur Objektebene konjugierten, streifenförmigen Bereich fokussiert. Dieser Schlitzblenden-Bereich weist Teilkonfokalität auf und wird nach spektraler Filterung, beispielsweise durch ein Emissionsfilter, mit Hilfe einer Optikgruppe (z. B. unter Verwendung von Zylinderlinsen) auf einen geeigneten, in Schlitzrichtung ortsauflösenden Detektor abgebildet, z. B. eine CCD-Zeilenkamera oder einen optical multichannel analyzer.

Alternativ oder zusätzlich kann als Detektor auch ein Spektrometer verwendet werden, das die linienförmige Strahlung quer zur Linie spektral aufteilt und auf einen Flächenstrahlungdetektor leitet. Als konfokale Blende kann dabei ein Eintrittsspalt des Spektrometers dienen. Möchte man zeitaufgelöste Prozesse analysieren, ist es zweckmäßig, als Detektoreinheit eine Streak-Kamera zu verwenden, welche die linienförmige Strahlung quer zur Linie zeitlich aufteilt und auf einen Flächenstrahlungsdetektor leitet.

Das ortsaufgelöste Signal des Detektors enthält dann in einer Koordinate die Ortskoordinate, in der anderen die Zeit- oder Wellnlängenkoordinate, die die zeitliche Entwicklung oder die spektrale Zusammensetzung des Strahlungssignals an den einzelnen Pixel entlang der Ortskoordinate widerspiegelt.

Bei der Detektion linearer oder nicht-linearer Raman-Signale kann man durch eine polarisationsabhängige Beleuchtung bzw. Detektion eine Symmetrie der zu untersuchenden Molekülschwingungen analysieren bzw. störende nicht-Raman-resonante Untergrundanteile unterdrücken. Es ist deshalb für solche Anwendungen bevorzugt, daß mindestens ein Polarisator in der Beleuchtungsanordnung und mindestens ein Polarisationsanalysator in der Detektoranordnung verwendet werden.

Bei der erwähnten Ausführungsform mit mehreren spektralen Kanälen, die jeweils eine Detektoreinheit umfassen, kann in jedem spektralen Kanal eine eigenständige Schlitzblende verwendet werden. Zur baulichen Vereinfachung kann aber auch optional eine gemeinsame Schlitzblende allen spektralen Kanälen vorgeordnet werden.

Zur einfachen Justierung der Lage des konfokalen schlitzförmigen Elementes (z. B. der Schlitzblende oder des Detektors) kann man dieses Element entsprechend verschiebbar ausbilden. Baulich einfacher ist aber eine in der Beleuchtungsanordnung und/oder der Detektoranordnung vorgesehene Korrektur-Vorrichtung mit mindestens einer planparallelen transparenten Platte, die in einer Halterung im Strahlengang gehalten ist und durch diese in einer Kipp- und/oder Schwenkbewegung um mindestens eine Achse antreibbar ist, um durch Veränderung der Kipplage der Platte einen bestimmten Parallelversatz der Strahlen im Strahlengang einzustellen.

Die Korrektur-Vorrichtung hat den Vorteil, daß eine einfache Kompensation oder Korrektur von in der Abbildung der optischen Anordnung entstehenden Fehlern möglich ist, insbesondere können einfach Umgebungs- oder Systemtemperatur, Stellung von wechselbaren oder beweglichen Elementen in der Anordnung, Farbfehler aufgrund Wellenlänge oder Wellängebereichen der genutzten Strahlung korrigiert werden. Je nach Anforderung kann dabei eine einachsige Kipp- bzw. Schwenkbewegung genügen. Möchte man einen zweiachsigen Parallelversatz vorsehen, kann entweder eine zweiachsig kipp- bzw. schwenkbare Platte verwendet werden, oder man kann zwei unterschiedlich einachsig kipp- oder schwenkbare Platten vorsehen. Wesentlich für die Erfindung ist es, daß die planparallele Platte mit der Halterung auf definierte und bekannte Weise im Strahlengang verkippt werden kann. Für eine zweiachsige Verstellung ist jede Kombination von Kipp- und Schwenkbewegung tauglich. Eine Kombination aus einer Kippbewegung und einer Schwenkbewegung ist dabei mechanisch relativ einfach zu realisieren und bringt trotz des bei der Schwenkbewegung auftretenden Verschiebens der planparallelen Platte entlang der optischen Achse überraschenderweise keinen Nachteil.

Die von der Vorrichtung bewirkte Korrektur kann ein Benutzer manuell einleiten, z.B. bei einer Justage im Werk. Besonders bevorzugt ist jedoch eine Weiterbildung mit einer Stelleinrichtung, die mindestens einen Betriebsparameter der optischen Anordnung erfaßt und die Kipplage abhängig vom Wert des Betriebsparameters einstellt. Die Kipplage kann beispielsweise in Kalibriertabellen abgelegt werden. Auch ist es möglich über aktive Regelkreise permanent, regelmäßig oder auf Anforderung hin eine Korrektur durch Einstellen der Kipplage zu optimieren. Für eine solche Ausgestaltung ist es bevorzugt, einen Regelkreis vorzusehen, der die Kipplage der Platte als Stellgröße verwendet, um die geschilderten Auswirkungen auf die abbildende optische Anordnung auszugleichen. So können auf einfache Weise in der optischen Anordnung eventuell vorhandene Temperatur- oder Langzeitdriftfehler ausgeglichen werden.

Da der Parallelversatz durch eine planparallele Platte bekanntermaßen von der Brechzahl des transparenten Plattenmaterials abhängt, können bei polychromatischer Strahlung im Strahlengang der optischen Anordnung Farbquerfehler durch einen wellenlängenabhängigen Parallelversatz aufgrund einer Dispersion des Plattenmaterials entstehen. Durch Aufbau der planparallelen Platte aus einer oder mehrerer Teilplatten kann man solche, durch die planparallele Platte bedingten Farbquerfehler kompensieren.

Die Korrektur-Vorrichtung kann aber auch zur Verwendung betriebszustandabhängig variierender Farbquerfehler der optischen Abbildung selbst eingesetzt werden. Ist beispielsweise eine optische Anordnung in der Lage, mit unterschiedlichen Wellenlängen zu arbeiten, so kann ein wellenlängenabhängiger und damit betriebszustandsabhängiger Farbquerfehler auftreten. Die Korrektur-Vorrichtung kann dann die planparallele Platte je nach gerade in der optischen Anordnung benutzten Wellenlängenbereich und dadurch verursachten Farbquerfehler in eine andere Kipplage bringen, so daß im Endeffekt trotz Betrieb mit unterschiedlichen Wellenlängenbereichen dennoch eine unveränderte optische Abbildung in der Anordnung erfolgt. Auch für diese Korrektur kann natürlich wieder, wie bereits erwähnt, eine geeignete Stelleinrichtung, die auch einen Regelkreis aufweisen kann, verwendet werden.

Die Anforderungen an die Genauigkeit oder Feinfühligkeit, mit der der Antrieb über die Halterung erfolgt, ist, wie der zugängige Parallelversatzbereich auch, über die Dicke der planparallelen Platte einfach vorgebbar.

Die Korrektur-Vorrichtung mindert, wie bereits erwähnt, die Anforderungen an verstellbare optische Elemente in der abbildenden optischen Anordnung. Dieser Vorteil ist besonders bedeutsam, wenn das konfokale Mikroskop austauschbare Strahlteiler aufweist, mit denen eine Anpassung auf verschiedene Applikationen, d.h. ein Wechsel der eingestrahlten oder ausgelesenen Wellenlängen erfolgt. Die Korrektur-Vorrichtung korrigiert die durch veränderbare optische Elemente bedingten Fehler ohne Eingriff auf die optische Abbildung. Darüber hinaus kann die Korrektur-Vorrichtung auch zwischen konfokaler Blende und Detektor eingesetzt werden und so den Strahlengang (Abbildung) zwischen Blende und Detektor geeignet parallelverschieben.

Über eine entsprechende Einstellung der Kipplage der planparallelen transparenten Plattekann man sowohl eine Kompensation von Abweichungen senkrecht zur Schlitzblende als auch eine Kompensation von Abweichungen parallel zur Schlitzblende ausgleichen.

Im ersteren Fall wird sichergestellt, daß das von der Probe kommende Licht exakt auf die Schlitzblende trifft und nicht oberhalb oder unterhalb der Schlitzblende dezentriert ist. Im zweiten Fall wird sichergestellt, daß das von der Probe kommende Licht den Zeilendetektor korrekt trifft und zwischen Bildern von zwei Detektionskanälen im System, die beispielsweise jeder einen eigenen Zeilendetektor aufweisen, kein Pixelversatz besteht. Somit kann das konfokale Mikroskop eine subpixelgenaue Bilddeckung bei Mehrkanalausbildung erreichen.

Die Korrektur-Vorrichtung ist im konfokalen Mikroskop weiter dahingehend vorteilhaft, daß nunmehr eine schmale Detektorzeile verwendet werden kann, ohne daß eine Bewegung von Schlitzblende und Detektor nötig wird. Es ist dann vermieden, daß bei einer Dejustage (bedingt durch Kipp- und Keilfehler wechselbarer Elemente) bei einem zur Auflösungserhöhung erfolgten Abblenden der Schlitzblende unnötig Lichtfluß verloren geht und damit das Signal/Rausch-Verhältnis sinkt.

Da die Kipp- oder Keilfehler einzeln einschaltbarer optischer Elemente in der Regel reproduzierbar sind, kann die Kipplage der transparenten planparallelen Platte auf einfache Weise gewählt werden. Bei Wechsel eines einschaltbaren optischen Elementes ist lediglich ein bestimmter Antrieb der planparallelen transparenten Platte erforderlich, um die für die anzustrebende Konfiguration des Mikroskops neu erforderliche Kipplage einzustellen. Es ist deshalb eine Weiterbildung des Mikroskops bevorzugt, bei der im Strahlengang wechsel- oder verstellbare Elemente vorgesehen sind und die Stelleinreichung eine Konfiguration der wechsel- oder verstellbaren Elemente als Betriebsparameter erfaßt und die Kipplage abhängig vom Wert des Betriebsparameters einstellt.

Ein Beispiel für einen solchen Parameter, bei dem nicht nur die Dejustierung der optischen Abbildung bezogen auf die Schlitzblende ausgeglichen wird, sondern auch ein Farbquerfehler, sieht in vorteilhafter Weise vor, im Strahlengang des Mikroskops Strahlung unterschiedlicher Wellenlänge zu führen, wobei die Stelleinrichtung die Kipplage entsprechend der Wellenlänge einstellt. Es ist dann jedem Detektionskanal eine oder mehrere planparallele Platten dem Detektor vorgeordnet und die Kipplage der planparallelen Platte wird von der Stelleinrichtung abhängig von der Wellenlänge bzw. dem Wellenlängenbereich im aktuellen Kanal eingestellt.

Eine besonders komfortable Benutzung erhält man, wenn ein Regelkreis vorgesehen ist, der die Strahlungsintensität an der Detektoreinheit maximiert, und/oder den Bildversatz minimiert indem die Kipplage der planparallelen Platte als Stellgröße eingesetzt wird. Somit können Langzeiteffekte oder Temperaturveränderungen, die Dejustagen nach sich ziehen, jederzeit ohne Einsatz eines Servicetechnikers auskorrigiert werden.

Das erfindungsgemäße Mikroskop sieht in einer Weiterbildung vor, daß die Probe weitfeldbeleuchtet wird und durch Scannen des Punkt- oder Punktgruppenspots abgebildet wird.

Die Erfindung setzt also nunmehr vorteilhafterweise eine Weitfeldbeleuchtung in Kombination mit einer gescannten Detektion ein. Mit dieser überraschend einfachen Maßnahme wird ein separater Detektor verzichtbar. Gleichzeitig erreicht man eine zusätzliche Fülle von Vorteilen.

Für die Weitfeldbeleuchtung können Strahlungsquellen verwendet werden, die am Laserscanningmikroskop für normale optische Beobachtung ohnehin vorhanden sind. Ein Umschaltmechanismus wird nicht mehr benötigt. Es ergibt sich also insgesamt eine bauliche Vereinfachung. Vorzugsweise wird die Weitfeldbeleuchtungsquelle eine Durchlichtbeleuchtung der Probe realisieren. Alternativ und zusätzlich ist natürlich auch eine Weitfeld-Auflichtbeleuchtung möglicht, um beispielsweise Epi-Fluoreszenzmessungen oder Reflexionsmessungen durchzuführen. Auch kann man beide Modi (Auf- und Durchlicht) gleichzeitig realisieren.

Die Tiefendiskreminierungsfähigkeit der konfokalen Detektoranordnung läßt damit eine tiefenaufgelöste Transmissionsmessung zu.

Durch den Einsatz der meist ohnehin vorhandenen Weitfeldbeleuchtungsquellen, die üblicherweise verglichen mit dem zum Scannen vorgesehenen Anregungsbeleuchtungsquellen sehr breitbandig sind, kann ein Weißlicht-Durchlichtbetrieb realisiert werden, der aufgrund der Erfordernisse konfokaler Abbildung in herkömmlichen Laserscanningmikroskopen so nicht oder nur unter enormem lichtquellenseitigen Aufwand möglich war. Gleiches gilt analog hinsichtlich Weitfeld-Auflichtfluoreszenzanregung.

Durch die Abtastung der weitfeldbeleuchteten Probe mit den gescannten Detektoren kann eine im Laserscanningmikroskop vorhandene spektrale Analysefähigkeit der Detektoranordnung auch im Transmissionsbetrieb ausgenutzt werden, was zu einer besseren Probencharakterisierung führt.

Die Weitfeldbeleuchtung kann unabhängig von der gescannten spotförmigen Beleuchtung betrieben werden.

Natürlich kann die Steuereinheit auch einen gleichzeitigen Betrieb einleiten, in dem dann die Probe gleichzeitig im Transmissions- wie auch im herkömmlichen Fluoreszenzbetrieb analysiert wird.

Beispielsweise kann die Steuereinheit verschiedene spektrale Kanäle geeignet auslesen, so daß in einigen spektralen Kanälen Fluoreszenzinformation über die Probe, in anderen spektralen Kanälen Transmissionsinformation anfällt. Eine geeignete Zusammenführung dieser Information, beispielsweise in einem überlagerten Bild, gibt eine herkömmlichen Systemen überlegene Probenanalyse. Es ist deshalb bevorzugt, daß die Steuereinheit die Spot-Beleuchtungsanordnung und die Weitfeldbeleuchtungsquelle simultan im Betrieb steuert und die spektralen Kanäle der Spot-Detektoranordnung geeignet ausliest.

Ein weiterer Vorteil des erfindungsgemäßen Ansatzes liegt darin, daß nun auch an mehreren Punkten gleichzeitig ein Durchlichtscan möglich ist, was herkömmliche, unter der Probe angeordneten separaten Detektoren mangels geeigneter Ortsauflösung nicht erlaubten. Die nun durch die Erfindung eröffnete Verwendung eines Multipunkt- oder Punktgruppenscanners im Durchlichtbetrieb mindert eventuelle Probleme durch zeitliche Fluktuationen der Weitfeldbeleuchtung, da diese durch geeignete Verlängerung der Integrationszeit bei Mehrpunkt- oder Punktgruppensystemen ausgeglichen werden kann. Es ist deshalb bevorzugt, daß die Weitfeldbeleuchtung und die gescannte punkt- oder punktgruppenförmige Beleuchtung gleichzeitig vorgenommen werden. Unter Punktgruppe wird dabei jede Anordnung von mehreren Punkten verstanden, insbesondere in Form einer Linie, die das Laserscanningmikroskop konfokal beleuchtet und abbildet. Durch diesen Ansatz werden weiter vorteilhaft geringere Probenbelastungen bzw. kürzere Meßzeiten realisiert, die im Stand der Technik so nicht möglich waren. Es ist deshalb besonders bevorzugt, daß die Spot-Detektoranordnung eine konfokale Punktgruppenabbildung verwirklicht, z. B. mit mindestens einer Nipkow-Scheibe und mindestens einem Matrixdetektor. Auch kann die Spotdetektoranordnung auch eine konfokale Schlitzblende mit einem Zeilendetektor verwenden, wenn eine Linie als Punktgruppe dinet.

Die Verwendung einer Weitfeldbeleuchtung erschließt schließlich völlig neue Kontrastierungsverfahren für die Durchlichtmessung. Es sind jetzt alle Kontrastierungsverfahren möglich, wie sie im Stand der Technik für herkömmliche optische Lichtmikroskope bekannt sind. Um dies zu realisieren, ist es zu bevorzugen, daß die Weitfeldbeleuchtungsquelle einen Kondensor aufweist, in den Kontrastierungsmittel schaltbar sind. Beispielsweise kann man Dunkelfeldbeleuchtung realisieren, indem im Kondensor eine geeignete Ringlende angeordnet wird.

Es sind aber auch noch weitere Kontrastierungsmethoden denkbar, wenn die Scananordnung ein Scanobjektiv aufweist, in dessen Pupillenebene geeignete Kontrastierungsmittel schaltbar sind. In Kombination mit der Einbringung von Kontrastierungsmitteln in den Kondensor sind dann nicht nur Dunkelfeldkontrast, sondern auch Phasenkontrast, VAREL-Kontrast, Polarisationskontrast oder Differentialinterferenzkontrast möglich.

Eine zusätzliche Untersuchung zeitaufgelöster Prozesse ist im Laserscanningmikroskop mit Hilfe gegateter Detektorarrays und der bekannten Pump- und Probentechnik möglich.

Aufgrund der an der Spaltblende erzeugten Teilkonfokalität wird eine im Vergleich zur optischen Weitfeldbeleuchtung verbesserte Schnittdickenseparation erzielt. In Kombination mit einer schnellen z-Fokussierung erreicht der erfindungsgemäße Linienscanner daher auch die 3D-Rekonstruktion ausgedehnter Proben. Eine schnelle z-Abtastung kann realisiert werden durch Bewegung der Probe in z-Richtung (z.B. durch schnelle mechanische Antriebe bzw. eine piezoelektrische Probenbewegung), durch Bewegung des Objektivs in z-Richtung (z.B. durch schnelle mechanische Antriebe bzw. eine piezoelektrische Objektivbewegung), durch Objektivinnenfokussierungen oder schnelle adaptive Optiken.

Das erfindungsgemäße Laserscanningmikroskop ermöglicht Verfahren zur Detektion schwacher spektroskopischer Signale in Mikroskopanordnungen. Die Einsatzgebiete erstrecken sich von der Mikrospektroskopie und Mikroanalytik zur "echten" 2D- und 3D-mikroskopische Bildgebung. Ein bevorzugtes Verfahren beinhaltet hierbei die konfokale Stokes'sche bzw. anti-Stokes'sche Raman-Mikroskopie. Grundsätzlich kann jedoch jede spektroskopische Methode - und vorzugsweise solche mit intensitätsschwachen Signalen - mit dem erfindungsgemäßen Mikroskop zur mikroskopischen Kontrastierung verwendet werden. Als solche Methoden sind z.B. denkbar: Lumineszenzspektroskopie (Fluoreszenz, insbesondere Fluoreszenz-Polarisationsmessungen, Chemolumineszenz, Biolumineszenz, Phosphoreszenz), Infrarotmikroskopie, Circular-Dichroismus (CD)-Spektroskopie, Hyper-Raman-Spektroskopie, Stimulierte Ramanspektroskopie, Kohärente Stokes'sche bzw. anti-Stokes'sche Raman-Spektroskopie (CARS, CSRS sowie sämtliche kohärente Raman-Prozesse höherer Ordnung sog. HORSES), allgemein parametrische nichtlineare optische Prozesse, wie Second Harmonic Generation (SHG), Third Harmonic Generation THG, Sum Frequency Generation (SFG), Zwei- und Mehrphotonen-Absorption bzw. -Fluoreszenz.

Mehrere der zuletzt aufgeführten Methoden der nichtlinearen optischen Spektroskopie erfordern zwei oder mehrere Laser, deren Strahlen kollinear überlagert werden. Hierbei erweist sich die in dargestellte Strahlvereinigung mehrerer Laser als besonders vorteilhaft.

Potentielle Verwendungen der Erfindung umfassen sämtliche Methoden, bei denen routinemäßig eine hohe mikroskopische Ortsauflösung mit klassischer optischer Spektroskopie verknüpft wird. Die Verwendung der Erfindung ist insbesondere dann vorteilhaft, wenn routinemäßig, d.h. ohne hohen Zeitaufwand 2D- und 3D-Substanzverteilungen quasi in Echtzeit verfolgt werden sollen. Ein vielversprechendes Anwendungsgebiet ist somit die chemischpharmazeutische Charakterisierung und Prozesskontrolle von Wirkstoffverteilungen in Fasern, Folien, Lacken, Dispersionen, Suspensionen, Emulsionen, Kunststoffen, Tabletten, etc. Besonders interessant ist hierbei die Analyse kristalliner und amorpher Festkörper (z.B. Analyse und Verteilung von Störstellen in Kristallen). Neben der mikroanalytischen Charakterisierung bestehender Substanzen ist auch Verfolgung chemischer Prozessabläufe denkbar, z.B. bei Umsetzungen in mikrofluidischen Reaktionsträgern, bei Kristallumfagerungen und der Festkörperpolymerisation.

Im Bereich der Medizintechnik ist insbesondere die ortsaufgelöste, nicht-invasive Bestimmung von Wirkstoffen mit Hilfe Raman-spektroskopischer Methoden von besonderem Interesse. Der Einsatz der Raman-Spektroskopie im Bereich medizinischer Anwendungen wird häufig durch die erforderliche Laserleistungsdichte im Fokus und die damit verbundene Zerstörung des lebenden menschlichen Gewebes limitiert. Im Vergleich zu entsprechenden Punktscannern ermöglicht der Einsatz des erfindungsgemäßen Linienscanners bei gleicher Aufnahmezeit und gleichem SNR die Durchführung von Messungen mit einer um den Faktor n (n=500-2000) geringeren Probenbeiastung. Als praktische Anwendung sei die Bestimmung der inhomogenen Verteilung von Pigmenten und Antioxidantien im menschlichen Auge und der Haut genannt.

Ein weiteres potentielles Anwendungsgebiet der beschriebenen Erfindung bildet das High-Throughput-Raman-Screening von Mikrotiterplatten (multiwell plates) im Bereich der pharmazeutischen Wirkstoffentwicklung. Von besonderem Interesse sind hierbei oftmals Raman-spektroskopische Polymorphie-Studien, welche apparativ nicht nur weniger aufwendig als Röntgenstrukturanalysen sind, sondern auch in Proben mit überstehender Lösung durchgeführt werden können.

Die Erfindung wird nachfolgend unter Bezugnahme auf die Zeichnung beispielhalber noch näher erläutert. In den Zeichnungen zeigen:

| | |
|---|---|
| Fig. 1 | eine schematische Darstellung eines Laserscanningmikroskops, |
| Fig. 2 | eine schematische Darstellung eines Strahlungsquellenmoduls, eines Scanmoduls sowie eines Detektormoduls für ein Laserscanningmikroskop, |
| Fig. 3 | eine schematische Darstellung des Strahlengangs in einer Beleuchtungsvorrichtung des Laserscanningmikroskops der Figur 2 in einer ersten Schnittebene, |
| Fig. 4 | den Strahlengang der Figur 3 in einer zweiten, senkrecht zur ersten Ebene gelegenen Schnittebene, |
| Fig.5 | eine Computerdarstellung eines Asphärenspiegels, in der im Strahlengang der Figuren 3 und 4 verwendet wird, |
| Fig. 6 | eine Schnittdarstellung durch den Asphärenspiegel der Figur 5 zur Verdeutlichung der diesen Spiegel charakterisierenden Größen, |
| Fig.7 | ein mit dem Strahlengang der Figuren 1 und 2 erreichtes Intensitätsprofil in einer Schnittebene, |
| Fig. 8 | eine schematische Darstellung eines Scanmoduls für das Laserscanningmikroskop der Figuren 1 oder 2, |
| Fig.9 | eine schematische Darstellung zur Verdeutlichung des Korrekturbedarfs bei der Anordnung der Figur 8, |
| Fig. 10 | eine schematische Darstellung einer planparallelen Platte in der Anordnung der Figur 8, |
| Fig. 11 | eine perspektivische Darstellung der planparallelen Platte der Figur 8 mit motorischen Antrieb, |
| Fig. 12 bis 15 | weitere Ausführungsformen eines Laserscanningmikroskops in Darstellungen ähnlich der Figur 2, |
| Fig. 16 | eine schematische Darstellung eines Scanmoduls sowie eines Detektormoduls eines Laserscanningmikroskops in Darstellungen ähnlich der Figur 2, |
| Fig. 17 | zwei Schemazeichnungen zur Veranschaulichung der Wirkungsweise des Detektormoduls der Figur 16. |
| Fig. 18 | eine schematische Darstellung des Strahlenganges zwischen einer im Laserscanningmikroskop der Figur 2 vorgesehenen Zoom-Optik und der mit dem Laserscanningmikroskop erfaßten Probe, |
| Fig. 19 | eine Kurve zur Veranschaulichung von Pupillendurchmessern im Aufbau gemäß Figur 18, |
| Fig. 20a, 20b und 21a, 21b sowie 22a, 22b | unterschiedliche Einstellungen der Zoomoptik der Figur 2, wobei die mit b bezeichneten Figuren eine Schnittdarstellung zeigen, die um 90° ge- |

genüber den mit a bezeichneten Figuren gedreht ist,

Fig. 23    ein Diagramm mit der Verstellung der vier Optikgruppen der Zoom-Optik der Figuren 20 bis 22 für einen ersten Betriebsmodus mit konstanter Abbildungslänge,

Fig. 24    ein Diagramm mit der Einstellung der vier Optikgruppen für einen zweiten Betriebsmodus mit konstanter Vergrößerung,

Fig. 25    eine Darstellung ähnlich der Figuren 23 und 24, jedoch für eine Betriebsweise mit gleichzeitiger Variation von Abbildungslänge und Vergrößerung,

Fig. 26    eine schematische Darstellung eines Scanfeldes zur Veranschaulichung möglicher Zoom-Wirkungen,

Fig. 27    eine schematische Darstellung eines Laser-Scanningmikroskops mit einer Nipkow-Scheibe,

Fig. 28    eine schematische Darstellung eines Laser-Scanningmikroskops mit paralleler Mehrpunktbeleuchtung und -abtastung.

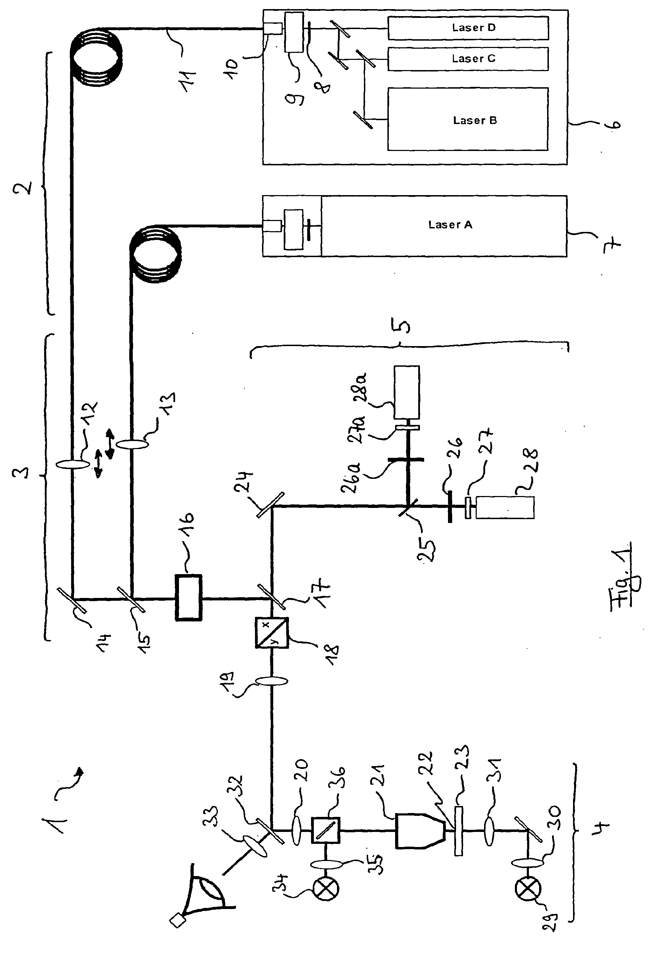

Figur 1 zeigt schematisch ein Laserscanningmikroskop 1, das im wesentlichen aus fünf Komponenten aufgebaut ist: einem Strahlungsquellenmodul 2, das Anregungsstrahlung für die Laserscanningmikroskopie erzeugt, einem Scanmodul 3, das die Anregungsstrahlung konditioniert und zum Scannen über eine Probe geeignet ablenkt, einem Mikroskopmodul 4, das die vom Scanmodul bereitgestellte scannende Strahlung in einem mikroskopischen Strahlengang auf eine Probe richtet, sowie einem Detektormodul 5, das optische Strahlung von der Probe erhält und detektiert. Das Detektormodul 5 kann dabei, wie es in Figur 1 dargestellt ist, spektral mehrkanalig ausgeführt sein.

Das Strahlungsquellenmodul 2 erzeugt Beleuchtungsstrahlung, die für die Laserscanningmikroskopie geeignet ist, also insbesondere Strahlung, die Fluoreszenz auslösen kann. Je nach Applikation weist das Strahlungsquellenmodul dazu mehrere Strahlungsquellen auf. In einer dargestellten Ausführungsform werden zwei Laser 6 und 7 im Strahlungsquellenmodul 2 vorgesehen, denen jeweils ein Lichtventil 8 sowie ein Abschwächer 9 nachgeschaltet sind und die ihre Strahlung über ein Koppelstelle 10 in eine Lichtleitfaser 11 einkoppeln. Das Lichtventil 8 wirkt als Strahlablenker, mit dem eine Strahlabschaltung bewirkt werden kann, ohne den Betrieb der Laser in der Lasereinheit 6 bzw. 7 selbst abschalten zu müssen. Das Lichtventil 8 ist beispielsweise als AOTF ausgebildet, das zur Strahlabschaltung den Laserstrahl vor der Einkopplung in die Lichtleitfaser 11 in Richtung einer nicht dargestellten Lichtfalle ablenkt.

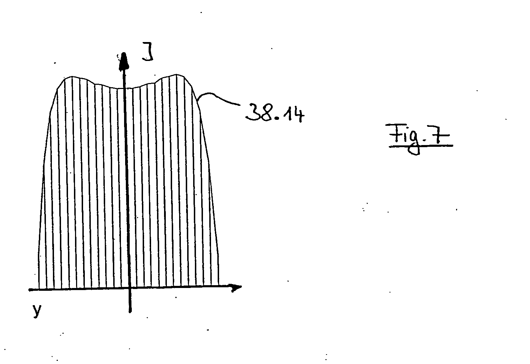

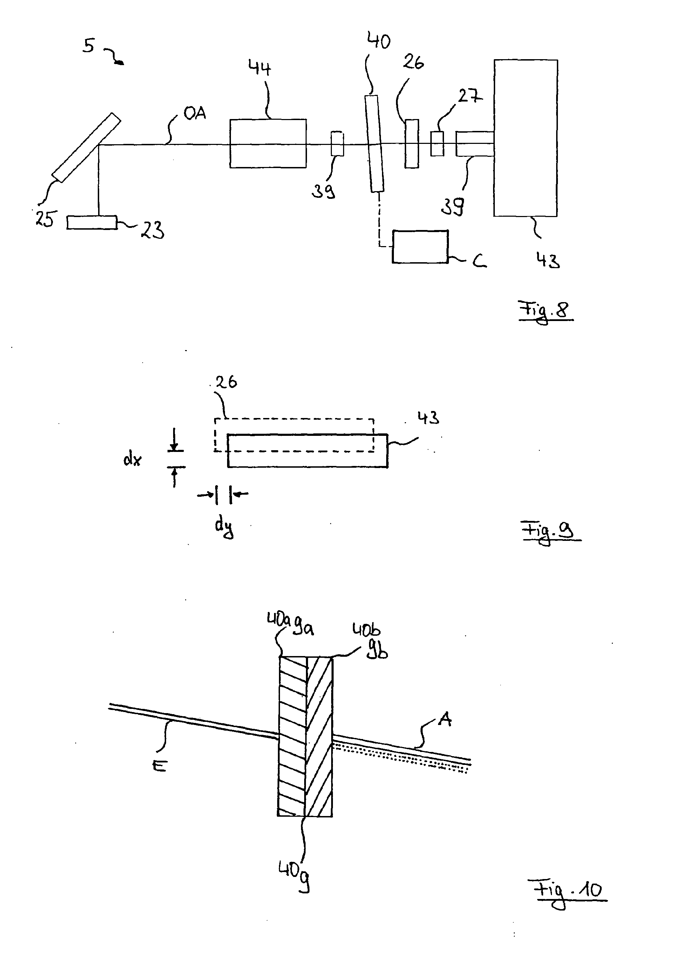

In der beispielhaften Darstellung der Figur 1 weist die Lasereinheit 6 drei Laser B, C, D auf, wohingegen die Lasereinheit 7 nur einen Laser A beinhaltet. Die Darstellung in Figur 6 und 7 ist also beispielhaft für eine Kombination aus Einzel- und Multiwellenlängenlaser, die einzeln oder auch gemeinsam an eine oder mehrere Fasern angekoppelt sind. Auch kann die Ankopplung über mehrere Fasern gleichzeitig erfolgen, deren Strahlung später nach Durchlaufen einer Anpaßoptik durch Farbvereiniger gemischt wird. Es ist somit möglich, verschiedenste Wellenlängen oder -bereiche für die Anregungsstrahlung zu verwenden.

Die in die Lichtleitfaser 11 eingekoppelte Strahlung wird mittels verschieblichen Kollimationsoptiken 12 und 13 über Strahlvereinigungsspiegel 14, 15 zusammengeführt und in einer Strahlformungseinheit 16 hinsichtlich des Strahlprofils verändert.

Die Kollimatoren 12, 13 sorgen dafür, daß die vom Strahlungsquellenmodul 2 an das Scanmodul 3 zugeführte Strahlung in einen Unendlichstrahlengang kollimiert wird. Dies erfolgt jeweils vorteilhaft mit einer einzelnen Linse, die durch Verschiebung entlang der optischen Achse unter Steuerung (einer nicht dargestellten) zentralen Ansteuereinheit eine Fokussierungsfunktion hat, indem der Abstand zwischen Kollimator 12, 13 und dem jeweiligen Ende der Lichtleitfaser veränderbar ist.

Die Strahlformungseinheit 16, welche später noch eingehend erläutert wird, erzeugt aus dem rotationssymmetrischen, gaußförmig profilierten Laserstrahl, wie er nach den Strahlvereinigungsspiegeln 14, 15 vorliegt, einen zeilenförmigen Strahl, der nicht mehr rotationssymmetrisch ist, sondern im Querschnitt zur Erzeugung eines rechteckig beleuchteten Feldes geeignet ist.

Dieser nachfolgend als zeilenförmig bezeichnete Beleuchtungsstrahl dient als Anregungsstrahlung und wird über einen Hauptfarbteiler 17 zu einem Scanner 18 geleitet. Auf den Hauptfarbteiler wird später noch eingegangen, hier sei lediglich erwähnt, daß er die Funktion hat, vom Mikroskopmodul 4 zurückkehrende Probenstrahlung von der Anregungsstrahlung zu trennen.

Der Scanner 18 lenkt den zeilenförmigen Strahl einachsig ab, wonach er durch ein Scanobjektiv 19 sowie eine Tubuslinse 20 und ein Objektiv 21 in einen Fokus 22 gebündelt wird, der in einem Präparat bzw. in einer Probe 23 liegt. Die optische Abbildung erfolgt dabei so, daß die Probe 23 in einer Brennlinie mit Anregungsstrahlung beleuchtet wird. Eine zweiachsige Ablenkung durch den Scanner 18 ist optional; sie kann, wie noch erläutert wird, zur Auswahl eines asymmetrisch zur optischen Achse liegenden Scan-Bereiches ROI eingesetzt werden.

Derart im linienförmigen Fokus 22 angeregte Fluoreszenz-Strahlung gelangt über das Objektiv 21, die Tubuslinse 20 und das Scanobjektiv 19 zurück zum Scanner 18, so daß in Rückrichtung nach dem Scanner 18 wieder ein ruhender Strahl vorliegt. Man spricht deshalb auch davon, daß der Scanner 18 die Fluoreszenz-Strahlung descannt. Die Probe wird auf der Linie parallel an mehreren Punkten gleichzeitig beleuchtet und abgetastet. Die Linie stellt somit eine Punktgruppe dar.

Der Hauptfarbteiler 17 läßt die in anderen Wellenlängenbereichen als die Anregungsstrahlung liegende Fluoreszenz-Strahlung passieren, so daß sie über einen Umlenkspiegel 24 im Detektormodul 5 umgelenkt und dann analysiert werden kann. Das Detektormodul 5 weist in der Ausführunsform der Figur 1 mehrere spektrale Kanäle auf, d.h. die vom Umlenkspiegel 24 kommende Fluoreszenz-Strahlung wird in einem Nebenfarbteiler 25 in zwei spektrale Kanäle aufgeteilt.

Jeder spektrale Kanal weist eine Schlitzblende 26 auf, die eine konfokale oder teil-konfokale Abbildung bezüglich der Probe 23 realisiert und deren Größe die Tiefenschärfe, mit der die Fluoreszenz-Strahlung detektiert werden kann, festlegt. Die Geometrie der Schlitzblende 26 bestimmt somit die Schnittebene innerhalb des (dicken) Präparates, aus der Fluoreszenz-Strahlung detektiert wird.

Der Schlitzblende 26 ist noch ein Blockfilter 27 nachgeordnet, das unerwünschte, in das Detektormodul 5 gelangte Anregungsstrahlung abblockt. Die derart abseparierte, aus einem bestimmten Tiefenabschnitt stammende, zeilenförmig aufgefächerte Strahlung wird dann von einem geeigneten Detektor 28 analysiert. Analog zum geschilderten Farbkanal ist auch der zweite spektrale Detektionskanal aufgebaut, der ebenfalls eine Schlitzblende 26a, ein Blockfilter 27a sowie einen Detektor 28a umfaßt.

Neben der konfokalen Abtastung eines mit einer Brennlinie beleuchteten Probenbereiches ermöglicht das Laserscanningmikroskop 1 der Figur 1 in der dargestellten, diesbezüglich optionalen Bauweise auch weitere Betriebsarten. Dazu ist eine Halogenleuchte 29 vorgesehen, deren Strahlung über eine Lampenoptik 30 und einen Kondensor 31 entgegen der Blickrichtung der Scanoptik 19 auf die Probe 23 in einer Weitfeldbeleuchtung gerichtet wird. Von dieser Beleuchtung transmittierte Anteile werden ebenfalls durch das Objektiv 21, die Tubuslinse 20, das Scanobjektiv 19 und den Scanner 18 im Scanverfahren abgetastet und mittels des Hauptfarbteilers 17 im Detektormodul 5 spektral analysiert. Die Detektion über den Scanner 18 bewirkt die Ortsauflösung in Form der Probenabtastung, und zugleich ist eine Weitfeldbeleuchtung über die Halogenlampe 29 möglich.

Das gleiche Konzept kann auch zur Auswertung rückreflektierter Strahlung und Epifluoreszenz-Strahlung eingesetzt werden, in dem über eine Quecksilberdampflampe 34 mit Lampenoptik 35 an einem Strahlteiler 36 Beleuchtungsstrahlung in den Tubus des Mikroskopmoduls 4 eingekoppelt wird. Diese Strahlung gelangt dann über das Objektiv 21 auf die Probe 23. Auch hier erfolgt die Beleuchtung ohne Einwirkung des Scanners 18. Die Detektion erfolgt dagegen wiederum über die Scanoptik 19 und den Scanner 18 im Detektormodul 5. Das Detektormodul 5 hat für diese Weiterbildung somit eine Doppelfunktion, zum einen dient es als Detektor für gescannt eingestrahlte Anregungsstrahlung, wobei der Scanner 18 sowohl zur Einstrahlung der Anregungsstrahlung als auch zum Descannen der detektierenden Strahlung dient. Zum anderen wirkt das Detektormodul 5 als ortsauflösender Detektor, wenn auf die Probe nicht weiter strukturierte Strahlung eingestrahlt wird, nämlich entweder als Weitfeldbeleuchtung von unten oder über das Objektiv 21.

Aber auch der Scanner 18 hat doppelte Wirkung, da er die Ortsauflösung durch punktgruppen- oder punktförmige Abtastung der Probe nicht nur bei punktgruppen- oder punktförmig eingestrahlter Anregungsstrahlung, sondern auch bei Weitfeldbeleuchtung erreicht.

Darüber hinaus ermöglicht das Laserscanningmikroskop 1 der Figur 1 nun einen Kombinationsbetrieb, bei dem sowohl punkt- oder punktgruppenförmig eingestrahlte Anregungsstrahlung aus dem Strahlungsquellenmodul 2 als auch Weitfeldbeleuchtung aus der Halogenlampe 29 bzw. der Quecksilberdampflampe 34 auf die Probe 23 gerichtet wird und mittels des Scanners 18 und des Detektormoduls 5 eine entsprechend punkt- oder punktgruppenförmige Abtastung der derlei mehrfach bestrahlten Probe erreicht wird. Durch geeignete Wahl der Nebenfarbteiler 25 bis 25c kann somit die klassische Transmissions- oder Reflektionsmikroskopie mit Laserfluoreszenz-Messung kombiniert werden. Die so durch Abtastung mittels der Auswertung der Signale der Detektoren 28 bis 28c gewonnenen Bildinformationen können dann eigenständig oder überlagert ausgewertet bzw. dargestellt werden.

Für die Weitfeldbeleuchtung ist vorzugsweise zwischen Lampenoptik 30 und Kondensor 31 eine Feldblende vorgesehen, um den beleuchteten Bereich einstellen zu können. Weiter ist in den Kondensor 31 eine Aperturblende schaltbar. Sie liegt in konjugierter Lage zu den Pupillenebenen des Laserscanningmikroskops. Bei diesen Pupillenebenen handelt es sich um die Pupillenebene, in der der Scanner 18 liegt sowie die Ebene, in der der Hauptfarbteiler 17 angeordnet ist. Als Aperturblende sowie in der Pupillenebene kann man nun verschiedene optische Elemente einsetzen, um aus der klassischen Mikroskopie bekannte Kontrastierungsmethoden zu verwenden, wie beispielsweise Dunkelfeld, Phasenkontrast, VAREL-Kontrast oder Differenzialinterferenzkontrast. Geeignete Aperturblenden oder in die Pupillenebene einzubringenden Elemente sind beispielsweise in der Publikation "Microscopy from the very beginning", Carl Zeiss Mikroskopie, D-07740 Jena, 1997, Seiten 18-23, erläutert sind. Der Offenbarungsgehalt dieser Firmenpublikation wird diesbezüglich explizit hier eingebunden. Für solche Kontrastierungseingriffe ist natürlich nicht nur die Pupillenebene geeignet. Auch andere Pupillenebenen sind dazu tauglich. Beispielsweise könnte der Eingriff auch in Nähe des Hauptfarbteilers 17 oder mittels einer Relayoptik nach dem Nebenfarbteiler 25 in einem (oder mehreren) spektralen Kanälen des Detektorstrahlenganges erfolgen.

Die Verwendung einer konfokalen Schlitz-Apertur im Detektormodul 5 ist nur beispielhaft. Prinzipiell können beliebige Mehrpunktanordnungen, wie Punktwolken oder Nipkow-Scheibenkonzepte, zur parallelen Punktgruppenabtastung verwendet werden. Wesentlich ist allerdings, daß der Detektor 28 ortsauflösend ist, damit eine parallele Erfassung mehrerer Probenpunkte beim Durchlauf des Scanners erfolgt.

Durch dieses Konzept entfallen die im Stand der Technik bislang erforderlichen nichtdescannten Detektoren am Mikroskopmodul 4. Außerdem kann durch die konfokale Detektion eine hohe Ortsauflösung erreicht werden, die ansonsten bei nichtdescannter Detektion nur mit aufwendigen Matrixsensoren machbar wäre. Darüber hinaus können zeitliche Fluktuationen der einstrahlenden Weitfeldbeleuchtung, z.B. der Halogenlampe 29 oder der Quecksilberdampflampe 34 u.ä., können durch eine geeignete Integration im ortsauflösenden Detektor 28, 28a ausgeschaltet werden.

Für diese Betriebsart des Laserscanningmikroskops 1 ist natürlich der Hauptfarbteiler 17 sowie der Nebenfarbteiler 25 geeignet eingestellt. Dies ermöglicht auch, beide Beleuchtungsarten, d.h. Weitfeldbeleuchtung von unten und Beleuchtung durch das Objektiv 21 gleichzeitig vorzunehmen, wenn die Farbteiler als geeignete Dichroiten ausgestaltet sind. Auch sind beliebige Kombinationen mit gescannter Beleuchtung aus dem Strahlungsqellenmodul 2 möglich. Eine entsprechende überlagerte grafische Darstellung der ausgewerteten Signale bietet dann eine gegenüber herkömmlichen Konzepten überragende Bildinformation.

Die Kombination einer konfokalen Zeilenabbildung, d.h. eines Linienscanners, mit einer spektralen mehrkanaligen Detektion ermöglicht eine hochparallele Datenaufnahme. Es ist eine Bildaufnahmerate von über 200 Bildern pro Sekunde erreichbar und eine Laserscanningmikroskopen bislang nicht realisierte Echtzeit-Fähigkeit gegeben. Alternativ ermöglicht das Laserscanningmikroskop 1 auch eine hochsensitive Detektion besonders schwacher Signalintensitäten. Verglichen mit einem konfokalen herkömmlichen Punkt-Laserscanningmikroskop ist bei gleicher Bildaufnahmezeit, bei gleicher in der Probe abgebildeter Fläche, bei gleichem Sehfeld und bei gleicher Laserleistung pro Pixel ein um einen Faktor $\sqrt{n}$ verbessertes Signal-/Rauschverhältnis realisiert, wenn man mit n die Anzahl der Pixel in der Detektorzeile bezeichnet. Hierfür ist ein Wert von 500 bis 2.000 typisch.

Das Strahlquellenmodul 2 der Laserscanningmikroskops 1 erfüllt die dafür nötige Voraussetzung, nämlich daß die Beleuchtungszeile, die von der Strahlformungseinheit 16 bereitgestellt wird, die n-fache Leistung aufweist, wie der Laserfocus eines vergleichbaren konfokalen Punktscanners.

Alternativ kann im Vergleich zum konfokalen Einzel-Punktscanner bei gleicher Bildaufnahmezeit und gleichem Signal-/Rauschverhältnis die Probenbelastung, d.h. die Strahlungsmenge der die Probe ausgesetzt wird und die zum Ausbleichen der Probe führen kann, um den Faktor n gesenkt werden, wenn die bislang in einem konfokalen Punktscanner aufgewandte Strahlungsleistung nun auf die Zeile verteilt wird.

Das zeilenabtastende Laserscanningmikroskop mit der Strahlformungseinheit 16 ermöglichst also im Vergleich zum konfokalen Punktscannern, intensitätsschwache Signale empfindlicher Probensubstanzen bei gleichen Signal-/Rauschverhältnis und gleicher Probenbelastung um den Faktor n schneller, bei gleicher Aufnahmezeit mit einem um den Faktor $\sqrt{n}$ verbesserten Signal-/Rauschverhältnis oder bei gleiche Aufnahmezeit mit gleichem Signal-/Rauschverhältnis und einer um den Faktor n geringeren Probenbelastung abzubilden.

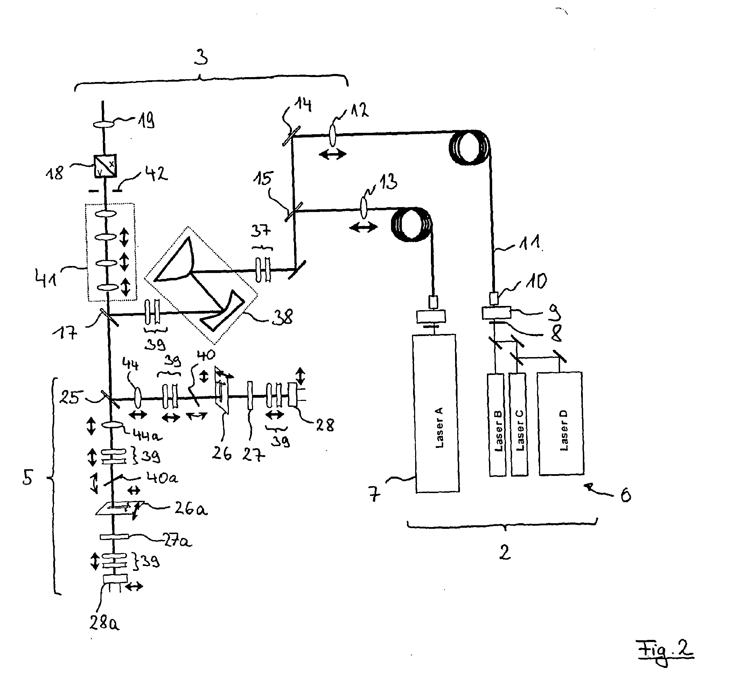

Figur 2 zeigt im Detail eine Ausführungsform für ein Strahlungsquellenmodul 2, ein Scanmodul 3 sowie ein Detektormodul 5 für das Laserscanningmikroskop 1. Bereits in Figur 1 erscheinende Bauteile sind in Figur 2 mit denselben Bezugszeichen bezeichnet, weshalb bezüglich der Beschreibung der Figur 2 zumindest teilweise auf die Figur 1 verwiesen wird.

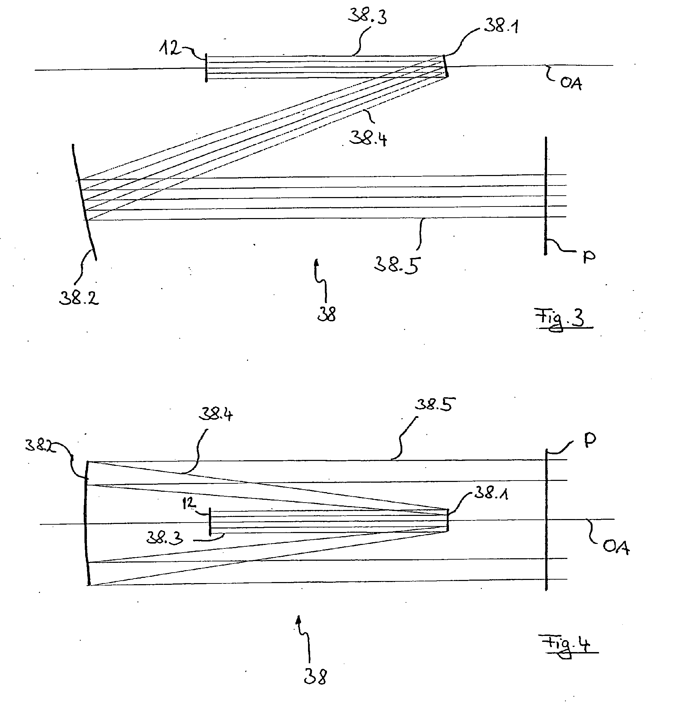

In Figur 2 ist zu sehen, daß die nach den beweglichen, d.h. verschieblichen Kollimatoren 12 und 13 vorliegenden Gauß'schen Strahlenbündel über eine Spiegeltreppe in Form der Strahlvereinigungsspiegel 14, 16 vereinigt und anschließend in ein Strahlbündel mit rechteckigem Strahlquerschnitt konvertiert werden. Im einfachsten Fall handelt es sich bei der Strahlformungseinheit 16 der Figur 1 um eine Zylinderoptik. In der Ausführungsform der Figur 2 wird jedoch ein Zylinderteleskop 37 verwendet, dem eine Asphäreneinheit 38 nachgeordnet ist, auf das eine Zylinderoptik 39 folgt. Bauweise und Funktion der Asphäreneinheit 37 werden nun nachfolgend anhand der Figuren 3 bis 7 erläutert.

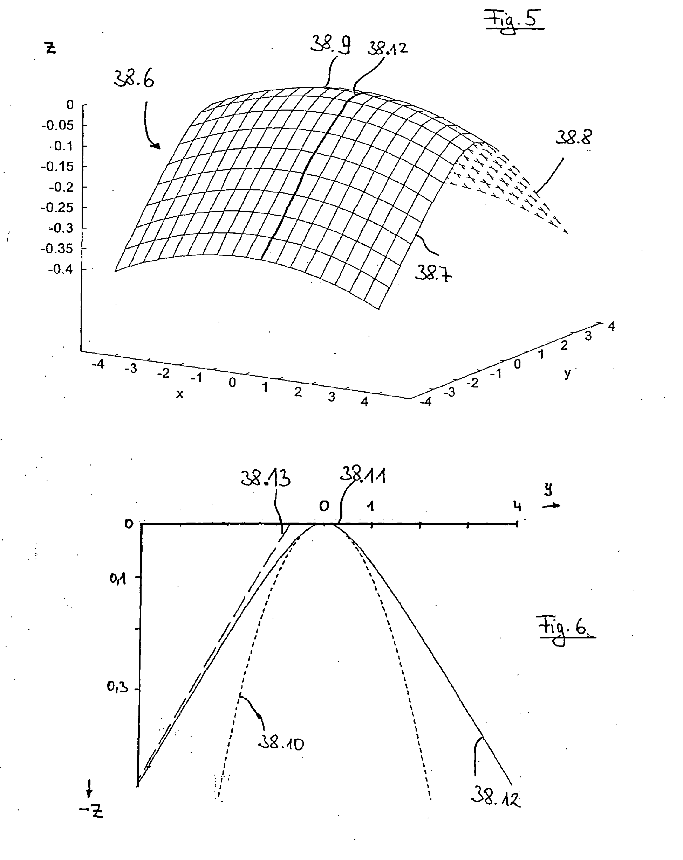

Die Figuren 3 und 4 zeigen eine Beleuchtungsanordnung, mit der Strahlung der Strahlquellen hinsichtlich des Strahlprofils umgeformt werden kann. Figur 3 ist ein Schnitt in einer (z,x)-Ebene; Figur 4 ist ein Schnitt senkrecht dazu in einer (z,y)-Ebene. Ursprünglich liegt ein Strahl vor, der in jeder Schnittrichtung senkrecht zur Ausbreitungsrichtung gaußförmig profiliert ist. Nach der Umformung liegt in einer Profilebene P ein Strahl vor, der im wesentlichen ein rechteckiges Feld ausleuchtet, wobei die Intensitätsverteilung entlang der Feldlängsachse nicht gaußförmig sondern kastenförmig ist.

Zur Strahlumformung wird ein Asphärenspiegel 38.1 genutzt, der die Strahlung aufweitet. Die aufgeweitete Strahlung wird mittels eines Sammelspiegels 38.2 wieder parallelisiert. Der Asphärenspiegel 38.1 ist mit einem Ursprungsstrahl 38.3 aus der Strahlquelle beaufschlagt, der ein rotationssymmetrisches gaußförmiges Strahlprofil aufweist. Der Asphärenspiegel 38.1 ist in dem in Figur 3 dargestellten Schnitt gemäß einem Krümmungsradius $r_x$ gekrümmt, in dieser Ebene also sphärisch. Die asphärische Komponente kommt erst in dem in Figur 4 dargestellten und noch zu erläuternden Schnitt zum Tragen. Aufgrund der Sphärizität des Asphärenspiegels 38.1 entlang der x-Achse wird der vom Asphärenspiegel 38.1 abgegebene divergierende Strahl unter Beibehaltung des Gaußprofils aufgeweitet. Der Sammelspiegel 38.2, der in der Schnittebene der Figur 3 ebenfalls sphärisch ist, sorgt für einen profilierten Strahl 38.5, der in der Profilebene P in der Schnittdarstellung der Figur 3 ebenfalls Gaußprofil hat. Natürlich kann man, wenn diese Aufweitung unerwünscht ist, Asphärenspiegel 38.1 und Sammelspiegel 38.2 i der (z, x)-Ebene auch plan ausführen.

Figur 4 zeigt einen Schnitt senkrecht zur Figur 3. In dieser Ebene ist der Asphärenspiegel 38.1 asphärisch ausgebildet und der von der Strahlquelle abgegebene Ursprungsstrahl 38.3 wird nun energieumverteilend in einen divergierenden Strahl 38.4 umgesetzt. Der Asphärenspiegel 38.1 reflektiert mit zunehmenden Winkel zur optischen Achse OA zunehmend Strahlleistung, so daß im divergierenden Strahl 38.4 in der Schnittdarstellung der Figur 2 Energie umverteilt. Der Sammelspiegel 2 sammelt den in der Schnittdarstellung der Figur 4 im Querschnitt nicht mehr gaußförmigen, divergierenden Strahl 4 und parallelisiert die Strahlung zu einem profilierten Strahl 38.5. In dieser Ebene ist deshalb in Figur 4 im Gegensatz zu Figur 3 eine nicht äquidistante Verteilung der zur Veranschaulichung eingezeichneten Teilstrahlen gezeigt.

Die Wirkung des in Fig. 3 und 4 auch mit einer konvexen Krümmung versehenen Asphärenspiegels 38.1 wird noch besser erkennbar, wenn man dessen in Figur 5 exemplarisch dargestellte Spiegelfläche 38.6 betrachtet. Die Spiegelfläche 38.6. weist zwei Dachflächen 38.7, 38.8 auf, die in einem First 38.9 zusammenlaufen. Gleichzeitig ist die Spiegelfläche 38.6 entlang der x-Achse sphärisch gekrümmt (ein optionales Merkmal, s.o.), wie auch an der Krümmung des Firstes 38.9 deutlich wird. Die Spiegelfläche 38.6 ist also in einem (z,y)-Schnitt (parallel zur y-Achse) kegelig mit abgerundeter Spitze. In einem Schnitt parallel zur x-Achse ((z,x)-Schnitt) liegt dagegen eine sphärische Krümmung vor. Natürlich kann anstelle der spährischen Krümmung längs der x-Achse eine plane Ausbildung oder ebenfalls eine asphärische Krümmung verwendet werden.

Die asphärische Krümmung in der (z,y)-Ebene bewirkt die in Figur 4 dargestellte Energieumverteilung, da durch das nur im Bereich der Spitze abgerundete Kegelprofil in zunehmende Winkel zur optischen Achse auch zunehmende Energieanteile reflektiert werden. Die sphärische Krümmung in der (z,x)-Ebene bewirkt dagegen eine profilbeibehaltende Aufweitung des Strahls, wie sie in Figur 3 dargestellt ist. Das ursprüngliche, rotationssymmetrische gaußförmige Profil wird somit zu einem annähernd rechteckigen Profil umgestaltet. Bei Asphärität in beiden Schnittebenen ist das Feld in beiden Schnittebenen homogenisiert.

Figur 6 zeigt eine Schnittlinie 38.12 der Spiegelfläche 38.6 in einem (z,y)-Schnitt, d. h. in einem Schnitt längs der y-Achse. Die Schnittlinie 38.12 ist zur Verdeutlichung nicht nur in Figur 6 sondern auch als dickere Linie in Figur 5 eingetragen. Ihre Form ist im wesentlichen durch zwei geometrische Faktoren bestimmt - zum einen durch eine Parabel 38.10, die die Form der abgerundeten Spitze der Schnittlinie 38.12 festlegt, und zum anderen durch eine Asymptote 38.13, die den Verlauf der Schnittlinie 38.12 fern der Spitze 38.11 definiert. Die Parabel 38.10 kann durch Angabe eines Krümmungsradius für die Spitze definiert werden. Die Asymptote 38.13 ist durch eine konische Konstante Q festgelegt. Für gegen Unendlich gehende y-Werte nähert sich die Schnittlinie 12 an die Gerade $1/(Q \cdot c) + y/(1-(1 + Q)^{1/2}$an. Die konische Konstante Q bestimmt also den Anstieg $1/(1-(1+Q))^{1/2}$ im äußeren sphärischen Bereich. Der Radius c legt die Krümmung im Bereich der Spitze 38.11 fest. Insgesamt wird die Schnittlinie deshalb durch die Gleichung $y^2/[c+(c^2-(1+Q)y^2)^{1/2}]$ definiert.

Die für eine Schnittrichtung erläuterte Asphärität kann natürlich auch in der anderen Schnittrichtung vorgesehen werden. Man erreicht damit ein homogen ausgeleuchtetes ellipsen- oder kreisförmiges Feld; letzteres bei einem rotationssymmetrischen Asphärenspiegel 38.1. Alternativ kann auf die Sphärizität in der x-Richtung verzichtet werden. Der Asphärenspiegel 38.1 hat dann zu jeder x-Koordinate die Profilform der Schnittlinie 38.12.

Die in Figur 5 dargestellte Spiegelfläche hat einen Krümmungsradius c = 10 mm, eine konische Konstante Q = -100 sowie einen Krümmungsradius entlang der x-Achse von $r_x$ = 100 mm. Der Parameter $r_x$ wird üblicherweise sehr viel größer als der Durchmesser des Ursprungsstrahls 38.3 gewählt werden.

Figur 7 zeigt als Profil 38.14 dargestellte annähernde Gleichverteilung der Intensität I in der Profilebene als Darstellung entlang der y-Achse. Wie zu sehen ist, liegt in 80% des ausgeleuchteten Bereiches die Strahlungsintensität bei über 80% des Maximalwertes; ist also im wesentlichen homogen. Das Profil 38.14 ist annähernd kastenförmig, jedenfalls einem Rechteck sehr viel näher als dem ursprünglich vorhandenen Gaußprofil. Bei Asphärität in beiden Raumrichtungen wäre in Figur 7 statt "y", der Radius eines ausgeleuchteten Feldes aufgetragen.

Die konvexe oder konkave Spiegelfläche 38.6 des Asphärenspiegel 38.1 kann auf verschiedenste Weise gefertigt werden. So kann in einen Zylinder, der einen Krümmungsradius hat, der dem Krümmungsradius $r_x$ der Spiegelfläche in der (z,x)-Ebene entspricht, das der Schnittlinie 38.12 entsprechende Profil eingearbeitet werden. Will man eine Spiegelfläche 38.6, die in der (z,x)-Ebene nicht gekrümmt ist, d. h. deren Krümmungsradius in dieser Schnittebene als unendlich angenommen werden kann, kann die Bearbeitung an einem Quader oder Keil erfolgen, der dann im Bereich des Firstes entsprechend der durch die Parabel 38.10 vorgegebenen Krümmung c abgerundet wird. Bei $r_x$-Radien kleiner

0 können Replika- oder Abformtechniken zur Ausbildung der Spiegelfläche 38.6 des Asphärenspiegels 38.1 eingesetzt werden.

Zur Erzeugung des profilierten Strahles 38.5 ist dem Asphärenspiegel 38.1, wie in den Figuren 3 und 4 gezeigt, ein Sammelspiegel 38.2 nachgeordnet. Dieser ist z. B. als torischer Spiegel mit Krümmungsradien $r_{tx}$, $r_{ty}$ ausgebildet und parallelisiert den divergierenden Strahl 38.4. Dabei läuft der divergierende Strahl 38.4 sowohl bedingt durch die sphärische Krümmung (in der (z,x)-Ebene) des Asphärenspiegel 38.1 als auch durch das asphärische Profil gemäß der Schnittlinie 38.12 bedingt auseinander. Zur Kollimation des divergierenden Strahles 38.4 ist der Sammelspiegel 38.2 deshalb als torischer Spiegel mit unterschiedlichen Krümmungsradien $r_{tx}$ und $r_{ty}$ ausgebildet. Die erstgenannte Divergenz stellt die Höhe des vom profilierten Strahl 38.5 auszuleuchtenden rechteckigen Feldes ein, die zweitgenannte Divergenz bewirkt die Aufweitung entlang der längeren Ausdehnung.

Um die Höheneinstellung des auszuleuchtenden rechteckigen Feldes besonders einfach vornehmen zu können, wird für den torischen Spiegel der Radius $r_{tx}$ als $r_{tx} + 2 \cdot d$ gewählt, wobei d den Abstand zwischen Asphärenspiegel 38.1 und Sammelspiegel 38.2 auf der optischen Achse beschreibt. Man erhält dann einen Strahlaufweitungsfaktor von $r_{tx}/r_x$ und damit etwa $1+2d/r_x$.

Anstelle des Sammelspiegels 38.2 kann natürlich auch eine entsprechende achromatische torische Linse verwendet werden. Ferner kann zur Behebung des veränderten Bündeldurchmessers quer zur homogenisierten Richtung mindestens ein Zylinderspiegel eingesetzt werden, welcher so dimensioniert ist, daß er zusammen mit dem Radius $r_x$ des Asphärenspiegels 38.1 sowie dem Radius $r_{tx}$ des Sammelspiegels 38.2 die Fokussierung und den Bündeldurchmesser quer zur homogenisierten Richtung gezielt verändert. Dieser Zylinderspiegel kann vor dem Asphärenspiegel 38.1 oder nach dem torischen Sammelspiegel 38.2 angeordnet werden. Seine Funktion kann man auch durch mindestens eine achromatische Zylinderlinse erreichen.

Die Beleuchtungsanordnung mit dem Asphärenspiegel 38.1 kann zur gleichmäßigen Füllung einer Pupille zwischen einer Tubuslinse und einem Objektiv dienen. Damit kann die optische Auflösung des Objektivs voll ausgeschöpft werden. Diese Variante ist zweckmäßig in einem punkt-scannenden Mikroskopsystem oder in einem linien-scannenden System (bei letzterem zusätzlich zu der Achse, in der auf bzw. in die Probe fokussiert wird).

Die wie erklärt linienförmig konditionierte Anregungsstrahlung wird auf den Hauptfarbteiler 17 gelenkt. Dieser ist in einer bevorzugten Ausführungsform als spektral-neutraler Teilerspiegel gemäß der DE 10257237 A1 ausgeführt, deren Offenbarungsgehalt hier vollumfänglich einbezogen ist. Der Begriff "Farbteiler" umfaßt also auch nichtspektral wirkende Teilersysteme. Anstelle des beschriebenen spektral unabhängigen Farbteilers kann auch ein homogener Neutralteiler (z.B. 50/50, 70/30, 80/20 o.ä.) oder ein dichroitischer Teiler Verwendung finden. Damit applikationsabhängig eine Auswahl möglich ist, ist der Hauptfarbteiler vorzugsweise mit einer Mechanik versehen, die einen einfachen Wechsel ermöglicht, beispielsweise durch ein entsprechendes Teilerrad, das einzelne, austauschbare Teiler enthält.

Ein dichroitischer Hauptfarbteiler ist besonders dann vorteilhaft, wenn kohärente, d. h. gerichtete Strahlung detektiert werden soll, wie z.B. Reflexion, Stokes'sche bzw. anti-Stokes'sche Raman-Spektroskopie, kohärente Raman-Prozesse höherer Ordnung, allgemein parametrische nicht-lineare optische Prozesse, wie Second Harmonic Generation, Third Harmonic Generation, Sum Frequency Generation, Zwei- und Mehrfotonenabsorption bzw. Fluoreszenz. Mehrere dieser Verfahren der nicht-linearen optischen Spektroskopie erfordern den Einsatz zweier oder mehrer Laserstrahlen, die kollinear überlagert werden. Hierbei erweist sich die dargestellte Strahlvereinigung der Strahlung mehrerer Laser als besonders vorteilhaft. Grundsätzlich können die in der Fluoreszenzmikroskopie weitverbreiteten dichroitischen Strahlteiler verwendet werden. Auch ist es für Raman-Mikroskopie vorteilhaft vor den Detektoren holografische Notch-Teiler oder -Filter zu Unterdrückung des Rayleigh-Streuanteils zu verwenden.

Vorteilhafterweise wird, wie in Fig. 2, 12, 14 und 15 gezeigt, die Anregungsstrahlung bzw. Beleuchtungsstrahlung dem Scanner 18 über eine motorisch ansteuerbare Zoom-Optik 41 zugeführt. Damit kann der Zoom-Faktor angepaßt werden und das abgetastete Sehfeld ist in einem bestimmten Verstellbereich kontinuierlich variierbar. Besonders vorteilhaft ist eine Zoom-Optik, bei der während Anpassung der Fokuslage und des Abbildungsmaßstabes die Pupillenlage im kontinuierlichen Durchstimmvorgang erhalten bleibt. Die z. B. in Figur 2 dargestellten, durch Pfeile symbolisierten, drei Freiheitsgrade der Zoom-Optik 41 entsprechen genau der Zahl der Freiheitsgrade, die zur Anpassung der drei Parameter, Abbildungsmaßstab, Fokus-, Pupillenlage, vorgesehen sind. Besonders bevorzugt ist eine Zoom-Optik 41, an deren ausgangsseitigen Pupille eine feste Blende 42 angeordnet ist. In einer praktischen einfachen Realisierung kann die Blende 42 auch durch die Begrenzung der Spiegelfläche des Scanners 18 vorgegeben sein. Die ausgangsseitige Blende 42 mit der Zoom-Optik 41 erreicht, daß unabhängig vom Verstellen der Zoomvergrößerung immer ein festgelegter Pupillendurchmesser auf das Scanobjektiv 19 abgebildet wird. Somit bleibt die Objektivpupille auch bei beliebiger Verstellung der Zoomoptik 41 vollständig ausgeleuchtet. Die Verwendung einer eigenständigen Blende 42 verhindert vorteilhaft das Auftreten ungewollter Streustrahlung im Bereich des Scanners 18.

Mit der Zoom-Optik 41 wirkt das Zylinderteleskop 37 zusammen, das ebenfalls motorisch betätigbar ist und der Asphäreneinheit 38 vorgeordnet ist. Dies ist in der Ausführungsform der Figur 2 aus Gründen eines kompakten Aufbaus gewählt, muß aber nicht so sein.

Wird ein Zoom-Faktor kleiner 1,0 gewünscht, wird das Zylinderteleskop 37 automatisiert in den optischen Strahlengang eingeschwenkt. Es verhindert, daß die Aperturblende 42 unvollständig ausgeleuchtet ist, wenn das Zoomobjektiv 41 verkleinert ist. Das einschwenkbare Zylinderteleskop 37 gewährleistet somit, daß auch bei Zoom-Faktoren kleiner 1, d. h. unabhängig von der Verstellung der Zoomoptik 41 am Ort der Objektivpupille stets eine Beleuchtungslinie konstanter Länge vorliegt. Im Vergleich zu einem einfachen Sehfeld-Zoom sind somit Laserleistungsverluste in dem Beleuchtungsstrahl vermieden.

Da beim Einschwenken des Zylinderteleskops 37 ein Bildhelligkeitssprung in der Beleuchtungslinie unvermeidlich ist, ist in der (nicht dargestellten) Steuereinheit vorgesehen, daß die Vorschubgeschwindigkeit des Scanners 18 oder ein Verstärkungsfaktor der Detektoren im Detektormodul 5 bei aktiviertem Zylinderteleskop 37 entsprechend angepaßt ist, um die Bildhelligkeit konstant zu halten.

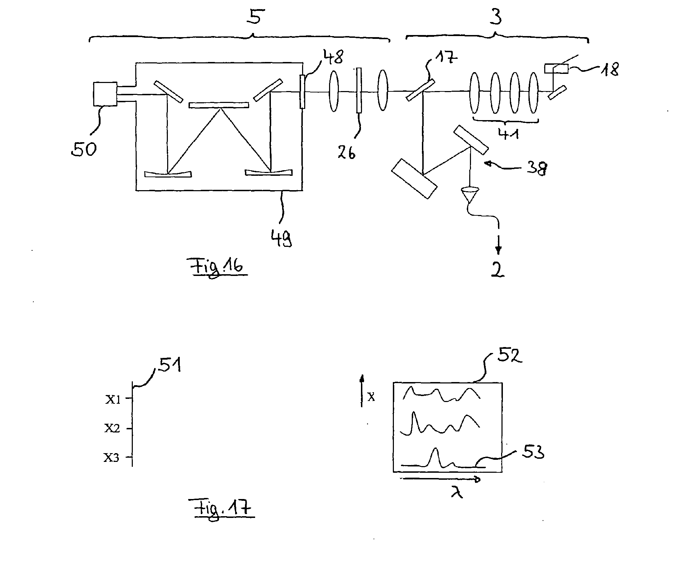

Figur 18 zeigt schematisch eine mögliche Ausführungsform für den Strahlengang der Figur 1 zwischen dem Hauptfarbteiler 17 und einer im Mikroskopmodul 4 angeordneten Probe 23. Die Zoom-Optik 41, die zur Vereinfachung in der Darstellung der Figur 19 nur zweigliedrig eingetragen ist, bewirkt im Beleuchtungsstrahlengang BS eine Pupillenabbildung. Gleichzeitig entsteht im Gegenstandsstrahlengang GS, der in Figur 18 gestrichelt gezeichnet ist, ein Zwischenbild ZB1 in der Zoom-Optik 41. Die Zoom-Optik 41 fokussiert von Unendlich nach Unendlich. Die Ausgangspupille AP der Zoom-Optik 41 ist zweckmäßigerweise, wie bereits erwähnt, durch die Blende 42 beschnitten, so daß unabhängig vom Verstellen der Zoomvergrößerung immer ein festgelegter Pupillendurchmesser am nachgeordneten Scanobjektiv 19 vorliegt. Im Mikroskopmodul 4 ist zwischen Tubuslinse 20 und Objektiv 21 in der Objektivpupille OP eine Objektivblende OB angeordnet, die durch die Austrittspupille AP gefüllt oder sogar überausgeleuchtet wird. Dadurch kann die maximale Objektivauflösung erreicht werden.

Figur 19 zeigt die Wirkung der Blende 42 für die Füllung der Objektivpupille OP. Dabei ist auf der vertikalen Achse der Pupillendurchmesser d und auf der horizontalen Achse die von der Zoom-Optik 41 bewirkte Vergrößerung v aufgetragen. Kurve 60 ist die Funktion, gemäß der sich der Pupillendurchmesser ohne die Blende 42 ändern würde. Die gestrichelte Linie 61 zeigt den Pupillendurchmesser nach der Blende 42 in Abhängigkeit von der Vergrößerung v. Die strichpunktierte Linie 62 veranschaulicht schließlich den Verlauf des Pupillendurchmessers der Objektivpupille OP. Wie zu sehen ist, ist durch die Objektivblende OB, die kleiner als die Blende 42 ist, die Objektivpupille unabhängig von der Vergrößerung v. Natürlich kann die Objektivblende OB auch durch entsprechende Fassungen im Objektiv 21 gegeben sein; es muß sich nicht um ein separates Bauteil handeln.

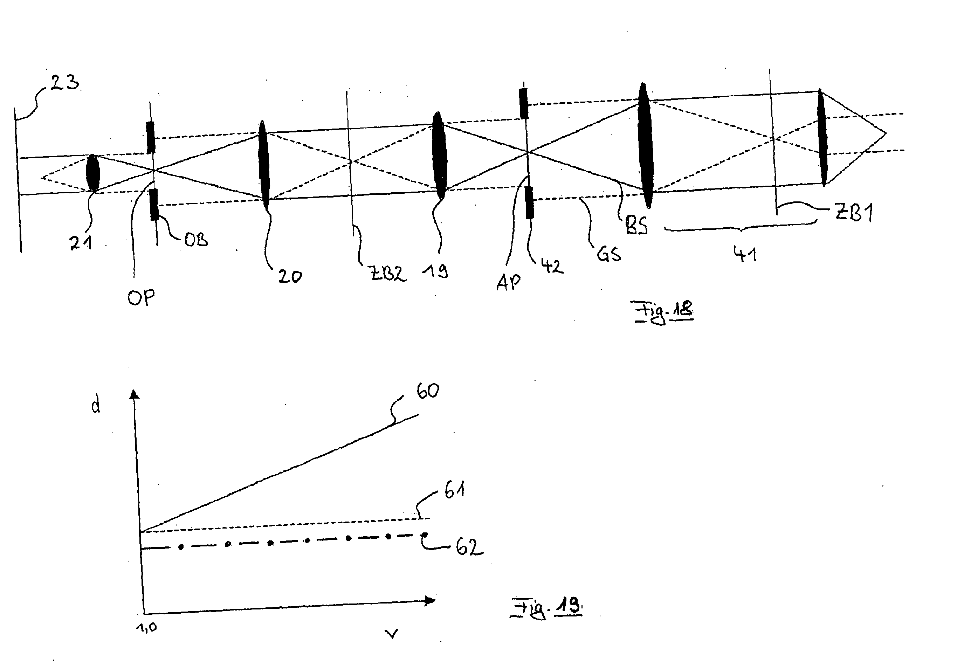

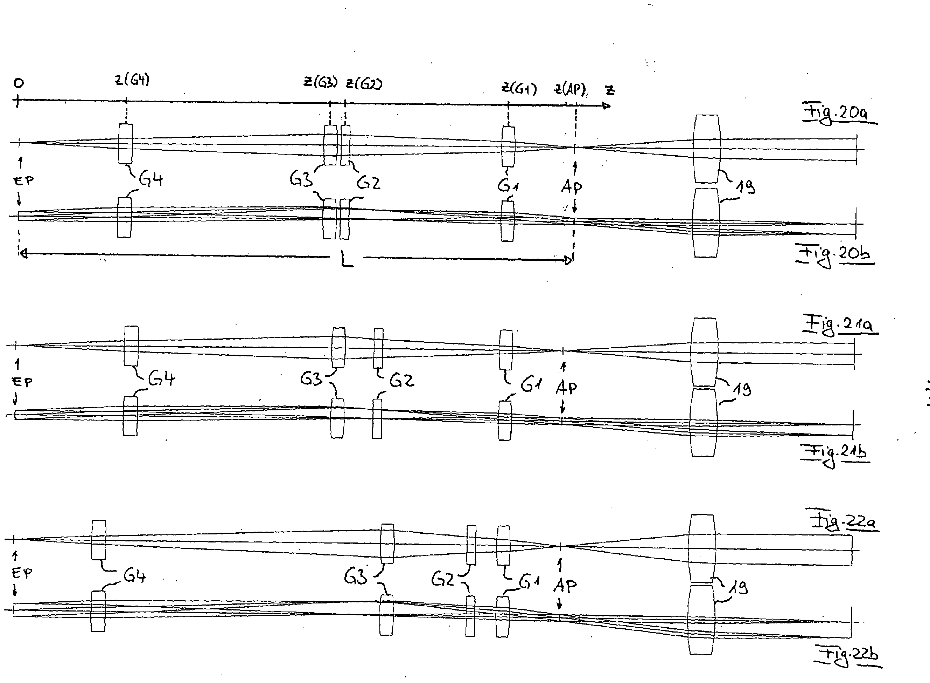

Die Figuren 20a/b, 21 a/b sowie 22a/b zeigen unterschiedliche Einstellungen des Zoomobjektivs 41, wobei die Darstellung gegenüber der Darstellung der Figur 19 invertiert ist, d. h. die Beleuchtungsrichtung verläuft in den Figuren 20 bis 22 von links nach rechts. Weiter ist in den Figuren 20 bis 22, wie in Figur 19 auch, zur Vereinfachung der Scanner 18 nicht eingezeichnet. Wie zu sehen ist, besteht in der exemplarisch gezeigten Bauweise das Zoom-Objetiv aus vier optischen Gruppen G1 bis G4, wobei die Gruppe G1 positive Brechkraft hat und fest angeordnet ist. Die zweite Gruppe G2 hat negative Brechkraft und wird zusammen mit den Gruppen G3 und G4, die wieder positive Brechkraft haben, bewegt. Die Bewegung erfolgt derart, daß die Fokussierung von unendlich nach unendlich erhalten bleibt und die Vergrößerung bzw. die Pupillenlage je nach Betriebsart eingestellt wird.

Weiter ist es in einer Ausbildungsvariante zweckmäßig, die Gruppe G1 mit dem nachfolgenden Scanobjektiv als Einheit auszubilden; in dieser Variante ist das Scanobjektiv also in Beleuchtungsrichtung vor dem (nicht gezeigten) Scanner angeordnet.

Jede Gruppe besteht aus mindestens einer Linse. Um den Anforderungen an den gewünschten Spektralbereich sowie die angestrebte Apertur/Feldwinkei zu genügen, sind die Gruppen bezüglich der Abbildungsfehler so weit wie möglich in sich korrigiert.

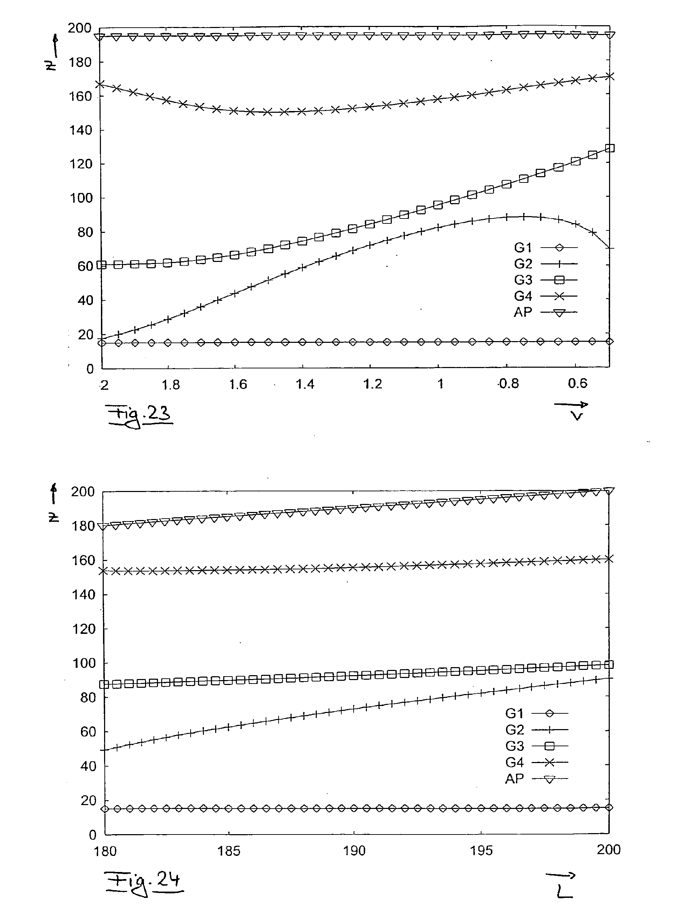

Die Fig. 23 bis 25 zeigen schematisch und beispielhaft die Bewegung der Variooptik mit den Gruppen G1 bis G4, wobei die Brennweiten wie folgt lauten: Brennweite G1, 45 mm; Brennweite G2, -153 mm; Brennweite G3, 45 mm; Brennweite G4, 89 mm. Die Brennweiten skalieren mit der Übertragungsfänge L.

Zur Veranschaulichung ist in den Figuren 23 bis 25 weiter die Lage der Austrittspupille AP sowie der Eintrittspupille EP eingezeichnet. Die Übertragungslänge L ergibt sich aus dem Abstand zwischen Eintrittspupille EP und Austrittspupille AP. Für Figur 20a ist darüber hinaus die z-Koordinate, die entlang der optischen Achse gemessen wird, für die vier Gruppen G1 bis G4 eingetragen. Die Eintrittspupille ist dabei auf Position 0 gesetzt.

Die mit a bezeichneten Figuren zeigen jeweils eine Schnittebene, die gegenüber den mit b bezeichneten Figuren um 90° gedreht ist. Somit enthalten die Figuren 20a, 21a und 22a den Pupillenstrahlengang sowie die Figuren 20b, 21 b sowie 22b den Objektstrahlengang. Aufgrund der im Ausführungsbeispiel verwendeten konfokalen Schlitzblendenanordnung mit linienförmiger Beleuchtung liegt im Objektstrahlengang immer dann eine Linie vor, wenn im Pupillenstrahlengang eine Pupille bzw. in den Fig. 20a, 21 a, 22a ein Knotenpunkt vorliegt. Bei einer andersartigen konfokalen Abbildung (z. B. mit Nipkow-Scheibe, Multipunktscannner, Einzelpunktscanner) sind die Verhältnisse natürlich anders.

In den Figuren 21a/b ist ein Vergrößerungsfaktor v = 1,4 eingestellt, wogegen die Stellung der Figuren 22a/b bei gleicher Abbildungslänge eine Vergrößerung von v = 2,0 bewirkt. Gegenüber den Abbildungslängen der Figuren 21 und 22 ist in der Einstellung der Figuren 20a/b die Abbildungslänge beim selben Vergrößerungsfaktor wie Figuren 21a/b um 10 mm verlängert. Die in den Figuren eingezeichnete Lage der Austrittspupille AP zeigt dies deutlich.

Das Zoomobjektiv 41 kann also in zwei unterschiedlichen Betriebsmodi betrieben werden. Zum einen ist es möglich, die Vergrößerung v bei konstanter Abbildungslänge L zu verstellen. Eine Verstellung von der in Figuren 21 a/b gezeichneten Lage in die Lage gemäß Figuren 22a/b ist beispielsweise ein Betrieb im ersten Betriebsmodus, der einen Scanfeld-Zoom verwirklicht. Die dafür möglichen Einstellungen der Gruppen G2 bis G4 sind in Figur 23 zu sehen, in der die Koordinaten der Gruppen G1 bis G4 auf der z-Achse, wie sie zur Figur 20a eingetragen ist, als Funktion der Vergrößerung v aufgetragen sind.

Der Begriff "Vergrößerung" ist hier wiederum auf die Wirkung der Zoom-Optik, d. h. die Bildvergrößerung bezogen. Eine Bildvergrößerung wird natürlich dann erreicht, wenn die Zoom-Optik in Beleuchtungsrichtung tatsächlich eine Verkleinerung des zugeführten Bildes der Beleuchtungsquelle zur Folge hat, d. h. wenn beispielsweise eine Brennlinie verkürzt wird.

Entgegen der Beleuchtungsrichtung, d. h. in Detektionsrichtung, findet dagegen eine Vergrößerung statt.

Figur 24 zeigt einen zweiten Betriebsmodus, der mit konstanter Vergrößerung die Übertragungslänge verändert. Da die Auftragung entlang der z-Achse in Millimeter vorgenommen ist, sieht man deutlich, daß durch eine Verstellung der Zoom-Optik die Übertragungslänge z. B. um bis zu 20 mm variiert werden kann. Die Lage der Austrittspupille AP verschiebt sich gegenüber der (bei 0 mm befindlichen) Eintrittspupille sich von 180 auf 200 mm. Die Werte der Figur betreffen dabei eine Veränderung der Übertragungslänge bei einem Vergrößerungsfaktor von 1,0.

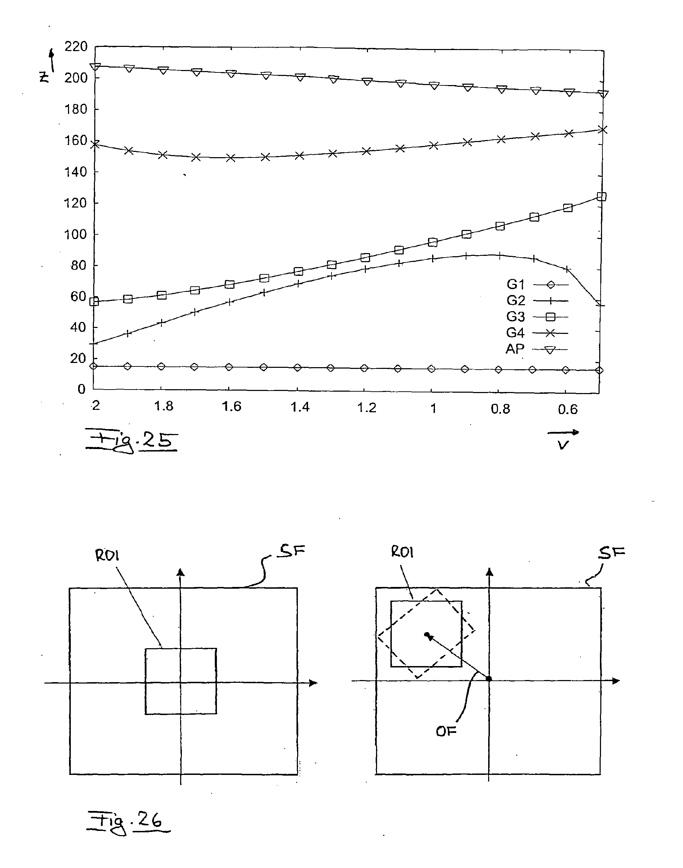

Figur 25 zeigt eine Betriebsweise, die eine Mischung aus der genannten ersten Betriebsweise (Figur 23) sowie der zweiten Betriebsweise (Figur 24) ist. Mit der gezeigten Ansteuerung der Optikgruppen G2 bis G4 (Optikgruppe G1 wird wiederum nicht verstellt) wird die Vergrößerung v gleichzeitig mit der Übertragungslänge L (letzteres ergibt sich aus der veränderten Lage der Austrittspupille in Figur 25) variiert.

Figur 20 zeigt, wie mit Hilfe der Zoom-Optik 41 innerhalb des zur Verfügung stehenden maximalen Scanfeldes SF ein Bereich (region of interest) ROI ausgewählt werden kann. Beläßt man die Ansteuerung des Scanners 18 so, daß die Amplitude sich nicht verändert, wie dies beispielsweise bei Resonanz-Scanner zwingend erforderlich ist, bewirkt eine an der Zoom-Optik eingestellte Vergrößerung größer 1,0 eine Einengung des ausgewählten Bereiches ROI zentriert um die optische Achse des Scanfeldes SF. Steuert man den Scanner so an, daß er ein Feld asymmetrisch zur optischen Achse, d. h. zur Ruhelage der Scannerspiegel abtastet, so erhält man im Zusammenhang mit einer Zoomwirkung eine Offsetverschiebung OF des ausgewählten Bereiches ROI. Dies wird auch als "crop"-Funktion bezeichnet.

Durch die bereits erwähnte Wirkung des Scanners 18, zu descannen, und durch den nochmaligen Durchlauf durch die Zoom-Optik 41, wird die Auswahl des interessierenden Bereiches ROI im Detektionsstrahlengang wieder in Richtung auf den Detektor hin aufgehoben. Somit kann man eine beliebige innerhalb des Scanbildes SF liegende Auswahl für den Bereich ROI treffen. Zusätzlich kann man für verschiedene Auswahlen des Bereiches ROI Bilder gewinnen und diese dann zu einem hochauflösenden Bild zusammensetzen.

Möchte man den ausgewählten Bereich ROI nicht nur um einen Offset OF gegenüber der optischen Achse verschieben, sondern auch zusätzlich drehen, ist eine Ausführungsform zweckmäßig, die in einer Pupille des Strahlenganges zwischen Hauptfarbteiler 17 und Probe 23 ein Abbe-König-Prisma vorsieht, das bekanntermaßen eine Bildfelddrehung zur Folge hat. Auch diese wird in Richtung auf den Detektor hin wieder aufgehoben. Nun kann man Bilder mit verschiedenen Offsetverschiebungen OF und verschiedenen Drehwinkeln messen und anschließend zu einem hochauflösenden Bild verrechnen, beispielsweise gemäß einem Algorithmus, wie er in der Veröffentlichung, Gustafsson, M., "Doubling the lateral resolution of wide-field fluorescence microscopy using structured illumination", in "Three-dimensional and multidimensional microscopy: Image acquisition processing VII", Proceedings of SPIE, Vol. 3919 (2000), p 141-150, beschrieben ist.

Neben der motorisch angetriebenen Zoomoptik 41 sowie dem motorisch aktivierbaren Zylinderteleskop 37 sind auch im Detektormodul 5 des Laserscanningmikroskops der Figur 2 fernsteuerbare Justierelemente vorgesehen. Zur Kompensation von Farblängsfehlern sind beispielsweise vor der Schlitzblende eine Rundoptik 44 sowie eine Zylinderoptik 39 und unmittelbar vor dem Detektor 28 eine Zylinderoptik 39 vorgesehen, die jeweils in axialer Richtung motorisch verschiebbar sind.

Zusätzlich ist zur Kompensation eine Korrektureinheit 40 vorgesehen, die nachfolgend anhand der Figuren 8 bis 11 beschrieben wird.

Figur 8 zeigt schematisch eine Ausführungsform für das Detektormodul 5 des Laserscanningmikroskopes 1, Es weist als Detektor 28 eine CCD-Zeile 43 auf, die über den Farbteiler 25 in den Strahlengang des Laserscanningmikroskops 1 eingebunden ist. Der Farbteiler 25 ist wechselbar, um mit Strahlung unterschiedlicher Wellenlängebereiche erfassen zu können. Die Anpaßbarkeit durch den wechselbaren Farbteiler 25 kann dabei sowohl hinsichtlich im Laserscanningmikroskop verwendeter Anregungsstrahlung als auch hinsichtlich zu detektierender (Fluoreszenz-)Strahlung gegeben sein.

Die CCD-Zeile 43 erhält über den Farbteiler 25 Strahlung, die dann durch die als konfokale Blende wirkende Schlitzblende 26 auf die CCD-Zeile 43 fällt.

Die Schlitzblende 26 bildet zusammen mit einer vorgeordneten Rundoptik 44 sowie der ebenfalls vorgeordneten ersten Zylinderoptik 39 sowie der nachgeordneten zweiten Zylinderoptik ein Pinhole-Objektiv der Detektoranordnung 5, wobei das Pinhole hier durch die Schlitzblende 26 realisiert ist.

Der zur Fluoreszenzanregung beleuchtete linien- oder zeilenförmige Bereich der Probe 23, der konfokal abgebildet wird, ist in Figur 8 schematisch dargestellt. Um eine unerwünschte Detektion von im System reflektierter Anregungsstrahlung an der CCD-Zeile 43 zu vermeiden, ist der zweiten Zylinderlinse 39 noch das Blockfilter 27 vorgeschaltet, das über geeignete spektrale Eigenschaften verfügt, um lediglich gewünschte Fluoreszenzstrahlung zu CCD-Zeile 43 gelangen zu lassen.

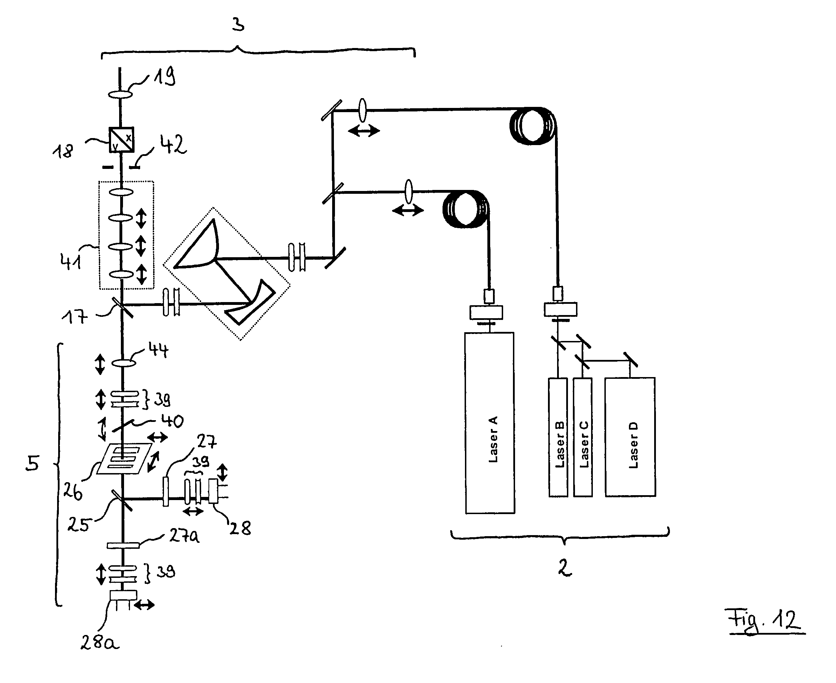

Ein Wechsel des Farbteilers 25 oder des Blockfilters 27 bringt unvermeidlich einen gewissen Kipp- oder Keilfehler bei Einschwenken mit sich. Der Farbteiler kann einen Fehler zwischen Probenbereich und Schlitzbelnd 26, das blockfilter 27 einen Fehler zwischen Schlitzblende 26 und CCD-Zeile 43 nach sich ziehen. Um zu verhindern, daß dann eine Neujustierung der Lage der Schlitzblende 26 bzw. der CCD-Zeile 43 erforderlich ist, ist zwischen der Rundoptik 44 und der Schlitzblende 26, d.h. im Abbildungsstrahlengang zwischen Proben 23 und CCD-Zeile 43 die planparallele Platte 40 angeordnet, die unter Steuerung eines Controllers C in verschiedene Kippstellungen gebracht werden kann. Die planparallele Platte 40 ist dazu in einer geeigneten (in Figur 8 nicht dargestellten) Halterung angebracht, die später noch anhand der Figur 11 erläutert werden wird.

Die planparallele Platte 40 bewirkt einen Parallelversatz, der in Figur 8 als leichter Versatz der optischen Achse OA eingezeichnet ist. Dieser Parallelversatz ist schematisch auch in Figur 10 zu sehen, die eine (später noch zu erläutemde) Ausführungsform einer zweitteiligen planparallelen Platte 40 betrifft. Das auf die Platte 40 schräg zur Plattenoberfläche einfallende Strahlenbündel E tritt als versetztes Strahlenbündel A aus. Ohne planparallele Platte 40 wäre der in Figur 10 gestrichelt eingezeichnete ausfallende Strahl gegeben.

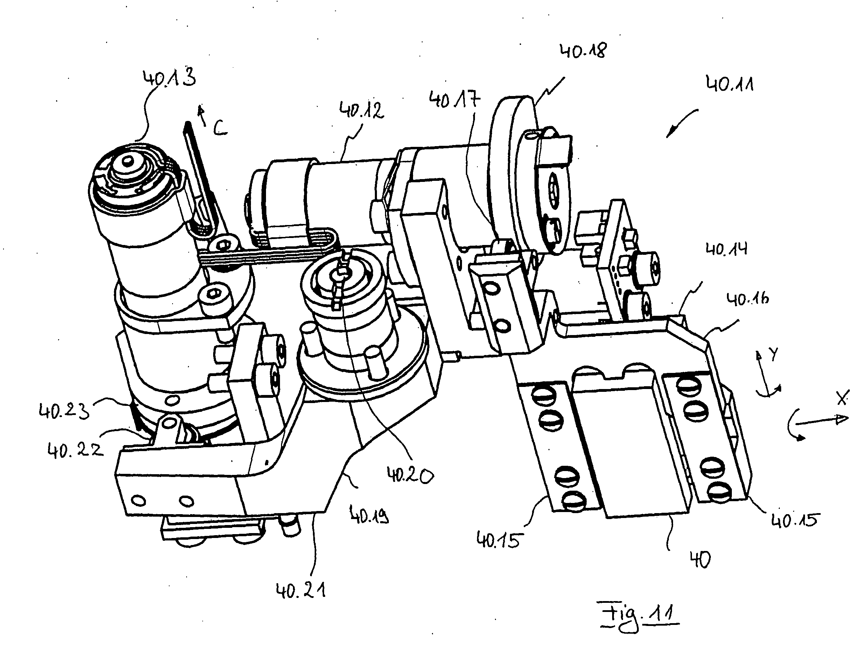

Eine Veränderung der Kippstellung der planparallelen Platte 40 ermöglicht es, die Lage der Probenzeile gegenüber der Schlitzblende 26 (sowie bei Einsatz der Platte 40 nach der Schlitzblende 26 alternativ auch die Lage der Blende zur ebenfalls als Blende wirkenden CCD-Zeile 43) so zu justieren, daß für gegebene Verhältnisse im Strahlengang, die sich durch Wechsel des Farbteilers 25 ändern mögen, immer eine optimale, d.h. zweiachsig zentrierte Lage gegeben ist. Dies ist in Figur 9 veranschaulicht, die in Draufsicht die Projektion der Schlitzblende 26 auf die Probenzeile 23 zeigt. Wie zu sehen ist, stellt sich aufgrund eines Kipp- oder Keilfehlers, der beispielsweise durch den Farbteiler 17 oder 25 oder den Blockfilter 27 bedingt sein kann, sowohl in x-Richtung ein Versatz dx als auch in y-Richtung ein Versatz dy zwischen Schlitzblende 26 und Probenzeile 23 ein.

Der Versatz dx hat zur Folge, daß das Signal-/Rauschverhältnis unnötig verschlechtert ist. Möchte man durch Abblenden der Schlitzblende 26, d.h. durch Verringern ihrer Ausdehnung in x-Richtung die Tiefenauflösung im konfokalen Mikroskop verbessern, kann es geschehen, daß bei einem Versatz dx, der größer als die halbe Höhe der Probenzeile 23 ist, gar keine Strahlung mehr auf die CCD-Zeiie gelangt. Der Versatz dx hat dann zur Folge, daß die mit dem Laserscanningmikroskop erreichbare Tiefenauflösung geringer ausfällt, als mit dem Gerät eigentlich erreichbar wäre. Analoges gilt für die alternativ oder kummulativ mögliche Variante zur Justierung von Schlitzblende 26 und CCD-Zeile 23

Die durch Einstellung der Kipplage der planparallelen Platte 40 erreichte optische Justierung des Probenspotbildes zur Schlitzblende 26 bewirkt, daß in x-Richtung gesehen keine Flächenbereiche der CCD-Zeile 43 unnötig unbestrahlt bleiben.

Der Versatz dy bewirkt dagegen, daß die in y-Richtung durch die CCD-Zeile 43 erfaßte Ortsinformation nicht den tatsächlichen Emissions- oder Reflexionsverhältnissen an der Probe 23 entspricht. Artefakte im Bild (oder ein Bildersatz) können die Folge sein. Die Einstellung der Kipplage der Platte 40 ermöglicht es, den Versatz dy zu minimieren, vorzugsweise sogar auf Null zu bringen, so daß die Schlitzblende 26 mittig auf der CCD-Zeile 43 liegt und alle Pixel der CCD-Zeile 43 korrekt ausgeleuchtet werden. Dies ist insbesondere dann wichtig, wenn das Laserscanningmikroskop mehrere Detektorkanäle aufweist, die über den Nebenfarbteiler 25 verschiedene Farbkanäle auslesen. Da aufgrund der individuellen Justierungen der Kanäle ansonsten unterschiedliche Versätze dy vorliegen würden, wäre bei einem solchen Mehrkanallaserscanningmikroskop ein Fehler bei der Zuordnung der einzelnen Farbkanäle in einem zusammengesetzten Bild die Folge.

Je nach Wellenlänge oder Wellenlängenbereich, die bzw. der in Detektormodul 5 ausgewertet wird, kann das Pinhole-Objektiv einen unterschiedlichen Farbquerfehler aufweisen. Gleiches gilt für vorgeschaltete Elemente, beispielsweise den Farbteiler 17, 25 oder andere auf der optischen Achse OA liegende Optiken. Durch Einstellung der Kipplage der Platte 40 kann dieser Farbquerfehler gezielt kompensiert werden. Der Controller C steuert dazu die Platte 40 in eine Kipplage, wobei jede im Wellenlängebereich bzw. jeder Wellenlänge, für die das Detektormodul 5 eingesetzt werden kann, eine eigene Kipplage zugeordnet ist.

Wird im Detektorkanal relativ breitbandig Strahlung geführt, kann die planparallele Platte selbst einen Farbquerfehler bewirken, wenn die Dispersion des transparenten Materials der planparallelen Platte 40 so ist, daß ein unterschiedlicher wellenlängenabhängiger Versatz des ausfallenden Strahlbündels A gegenüber dem einfallenden Strahlbündel E gegeben ist. Zur Kompensation ist die in Figur 10 dargestellte Bauweise der planparallelen Platte 40 in einer Ausführungsform vorgesehen, die aus zwei Teilplatten 40a, 40b besteht. Die Materialien dieser Teilplatten 40a, 40b sind unterschiedlich und so gewählt, daß sich im gegebenen Wellenlängenbereich die dispersiv bedingten Farbquerfehler möglichst aufheben. Beispielsweise bewirkt die Teilplatte 40a für kürzere Wellenlängen einen stärkeren Versatz als die Teilplatte 40b; umgekehrtes gilt für längere Wellenlängen. Somit ist eine Kompensation des Farbquerfehlers der planparallelen 40 erreicht. Zur Erzeugung eines farbunabhängigen oder eines gezielt farbabhängigen Parallelversatzes können auch zwei getrennt kippbare Platten mit gegenläufiger Ablenkung und aus Materialien mit unterschiedlicher Dispersion verwendet werden.

Der Controller C stellt die Kipplage der Platte 40 auf Vorgabe eines Benutzers hin, nach Auswertung der aktuellen Konfiguration (insbesondere auch Umgebungs- oder Gerätetemperatur oder andere externe Einflußgrößen) des Laserscanningmikroskops oder in kontinuierlich oder intermittierend ablaufenden Regelvorgängen ein. Bei einer Regelung wird die Kipplage der Platte 40 als Stellgröße verwendet. Als geregelte Größe kann in einem Kalibrierschritt die Strahlungsintensität oder der Bildversatz auf der CCD-Zeile 43 ausgewertet werden.

Der vom Controller C gesteuerte Antrieb 40.11 ist in Figur 11 perspektivisch dargestellt. Wie zu sehen ist, wird die planparallele Platte 40 mittels zweier Schrittmotoren 40.12, 40.13 um die x-bzw. y-Achse verstellt. Die Verstellung der x-Achse ist eine Kippbewegung mit einer Drehachse in der Mitte der Platte 40. Die Drehung um die y-Achse ist eine Schwenkbewegung um eine außerhalb der Platte gelegene Achse.

Zur Kippung um die x-Achse ist eine Halteplatte 40.14 vorgesehen, an der ein Paar Blattfedern 40.15 angeschraubt ist, die einen Rahmen 40.16 befestigen, in welchem die planparallele Platte 40 gefaßt ist. Die Blattfedern 40.15 legen die Kippachse fest. Sie drücken eine am Rahmen 40.16 befestigte Rolle 40.17 auf eine Kurvenscheibe 40.18, die vom Schrittmotor 40.12 angetrieben ist, welcher ebenfalls auf der Halteplatte 40.14 sitzt. Je nach Stellung der Kurvenscheibe 40.18 wird somit die Rolle 40.17 und damit der Rahmen 40.16 unterschiedlich ausgelenkt, wodurch die Kippung der Platte 40 um die x-Achse erreicht ist.

Die Halteplatte 40.14 ist ihrerseits ein Arm eines Hebels 40.19, der um eine Schwenkachse 40.20 drehbar ist. Die Schwenkachse 40.20 stellt die Achse für die Bewegung der Platte 40 um die y-Ebene dar. Der andere Arm 40.21 des Hebels 40.19 trägt an seinem Ende eine Rolle 40.22, die an einer Kurvenscheibe 40.23 anliegt, welche vom Schrittmotor 40.13 angetrieben wird. Ähnlich wie die Blattfedern 40.15 die Rolle 40.17 auf die Kurvenscheibe 40.18 drücken, ist an der Schwenkachse 40.20 ein Federelement vorgesehen, das die Rolle 40.22 auf die Kurvenscheibe 40. 23 preßt.

Durch Ansteuerung der Schrittmotoren 40.12, 40.13 kann der Controller C, der über nicht weiter bezeichnete Leitungen mit den Schrittmotoren verbunden ist, die Kipp- bzw. Schwenklage der planparallelen Platte 40 im Strahlengang der Detektoranordnung motorisch einstellen. Durch die inkrementelle Ansteuerung der Schrittmotoren 40.12, 40.13 ist in Kombination mit einer zum Betriebsbeginn angefahrenen Referenzposition die aktuelle Stellung der Platte 40 zu jedem Betriebszeitpunkt dem Controller C bekannt, so daß die Stellung der Platte 40 in einem Regelkreis als Stellgröße verwendet werden kann bzw. gemäß abgespeicherten Vorgaben eingestellt werden kann.

Alternativ zur zweiachsigen Verstellung, wie sie beispielhalber in Figur 11 gezeigt ist, können auch zwei einachsig verstellbare Platten hintereinander geschaltet werden.

Zusätzlich zur Verstellung mittels der Korrektureinheit 40 bzw. 40a kann auch die Schlitzblende 26, 26a selbst verstellt werden. Dies geschieht insbesondere, um die Breite der Schlitzblende 26, 26a und damit den Airy-Durchmesser am Detektor anzupassen. Durch die Verstellung der Breite des Schlitzes der Schlitzblende 26 bzw. 26a wird die Tiefenschärfe und damit die Diskriminierung des Tiefenschnittes in z-Richtung, d. h. entlang der optischen Achse in der Probe 23 eingestellt. Eine zusätzliche Querverschiebung dient zu einer Grobjustierung außerhalb des Justierbereiches der Korrektureinheit 40 bzw. 40a.

Figur 12 zeigt einen gegenüber Figuren 1, 2 abgewandelten Aufbau, bei dem eine Schlitzblende mit unterschiedlich großen festen Schlitzen auf einem Schieber angeordnet ist. Bei dieser Variante der Schlitzblende 26 kann es sich beispielsweise um eine geeignet strukturierte Chrommaske handeln, die motorisch verstellt wird. Im Unterschied zum Aufbau der Figur 2 ist die Schlitzblende ebenfalls dem Nebenfarbteiler 25 angeordnet; dies stellt eine Alternative zum Aufbau der Figur 2 dar.

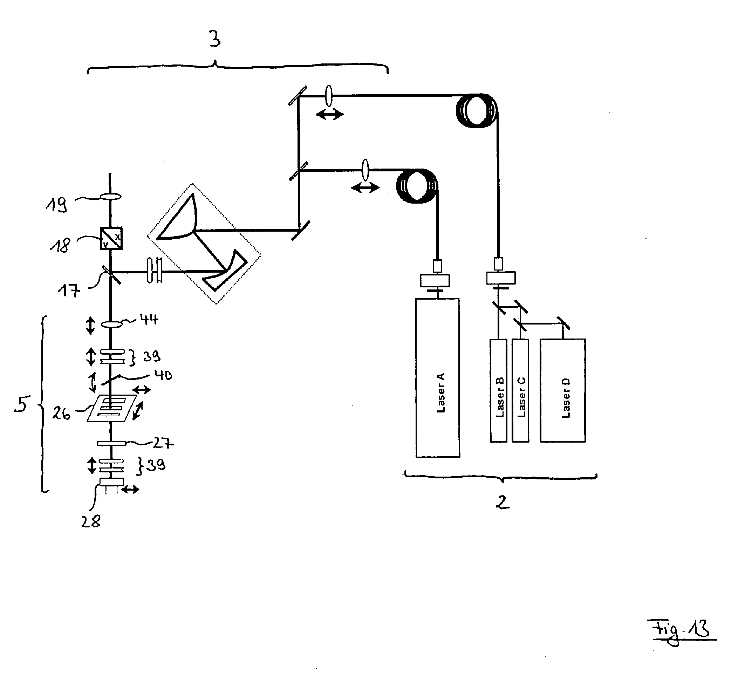

Figur 13 zeigt eine vereinfachte Bauweise des Aufbaus der Figur 12, bei dem auf die ZoomVerstellung verzichtet wurde, d. h. die Zoomoptik 41 sowie das Zylinderteleskop 37 entfallen. Auch ist Figur 13 ein Beispiel für eine Bauweise mit nur einem spektralen Kanal, d. h. auf die Ausbildung mehrerer spektraler Kanäle im Detektormodul 5 wurde verzichtet. Ein Nebenfarbteiler 25 ist nicht vorgesehen. Um die Bauweise der Figur 13 später einfach auf ein mehrkanäliges Detektormodul 5 aufrüsten zu können, ist es zweckmäßig anstelle des Nebenfarbteilers 25 ein (in Figur 13 nicht dargestelltes) Kompensationsglas anzuordnen, das später durch den Nebenfarbteiler ersetzt werden kann.

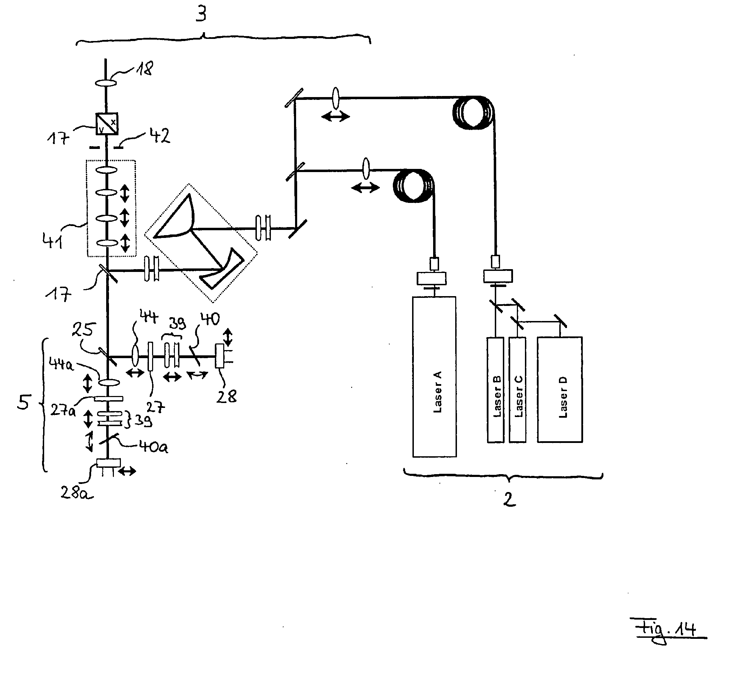

In Figur 14 ist eine weitere Ausführungsform eines Laserscanningmikroskops 1 gezeigt, dessen Detektoren 28, 28a nun als CCD-Zeilen ausgebildet sind, die in der konfokalen Ebene liegen, die ansonsten die Spaltblenden beinhalten und die somit deren Funktion übernehmen. Verwendet man ein geeignet ausiesbares Detektorarray, kann der Effekt einer Variation der Schlitzblendengröße durch eine entsprechende Auswahl des Auslesebereichs auf dem Detektorarray realisiert werden.

Figur 15 zeigt eine weitere Bauvariante, bei der im den Beleuchtungsstrahlengang Polarisatoren 45, 46 und in die Detektorpfade Analysatoren 47, 47a eingeschaltet sind. Diese Baugruppen können beispielsweise motorisch in den Strahlengang verfahrbar gestaltet sein. Eine polarisationsempfindliche Anregung bzw. Detektion ist insbesondere für die Auswertung linearer oder nicht linearer Raman-Signale von Vorteile, um eine Symmetrie einer untersuchten Molekülschwingung zuzuordnen zu können bzw. um störende nicht-Raman-resonante Untergrundsignale unterdrücken zu können.

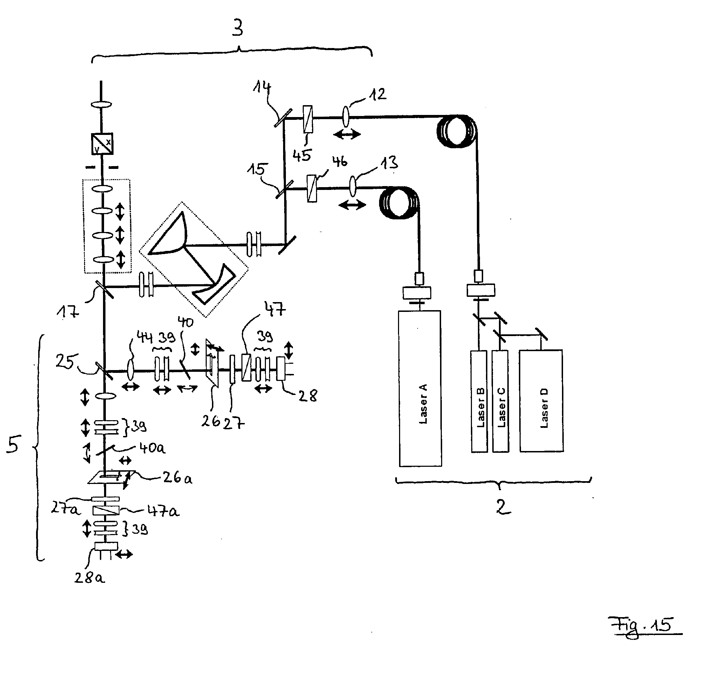

Die bisher beschriebenen Ausführungsformen eines Laserscanningmikroskopes sehen spektral diskrete Detektorpfade im Detektormodul 5 vor. Möchte man einen breitbandigen spektralen Bereich simultan analysieren, kann die in Figur 16 systematisch dargestellte Konzeption zum Einsatz kommen. Figur 16 zeigt ausschnittsweise und vereinfacht das Scanmodul 3 sowie das Detektormodul 5. Die die Schlitzblende 26 passierende Strahlung von der Probe wird in das Eintrittsfenster 48 eines Spektrometers 49 geleitet, das die zeilenförmig eintretende Strahlung quer zur Zeilenrichtung spektral zerlegt und auf eine zweidimensional auflösende Detektoreinrichtung leitet, im Ausführungsbeispiel eine CCD-Kamera 50. Eine in Figur 17 dargestellte Brennlinie 51 auf der Probe wird dann in das in Figur 17 ebenfalls gezeigte Bild 52 aufgespaltet, wobei die mit X bezeichnete Richtung die Ortsauflösung wiedergibt, die Richtung senkrecht dazu, in Figur 17 mit λ bezeichnet, kodiert dagegen die spektrale Zusammensetzung der Strahlung am gegebenen Ort. Zur Veranschaulichung ist in das Bild 52 eine Reihe von Kurven 53 eingetragen, die die spektrale Zusammensetzung symbolisieren. Realiter erhält man natürlich nicht Kurven 53, sondern die in λ-Richtung angeordneten Pixel der CCD-Kamera 50 werden abhängig von der spektralen Zusammensetzung der am Ort aufgenommenen Strahlung von der Probe unterschiedlich intensiv beleuchtet.

In einer vereinfachten Ausführungsform kann die Schlitzblende 26 durch einen Eintrittsspalt des Spektrometers 49 realisiert werden, Schlitzblende 26 und als Eintrittsspalt ausgebildetes Eintrittsfenster 48 fallen dann zusammen.

Insbesondere bei Verwendung von holographischer Raman-Notch Filter ist es auch in der Raman-Mikroskopie denkbar, dass anstelle von Zweifach- und dReifach-Spektrometer Einfach-Monochromatoren Verwendung finden.

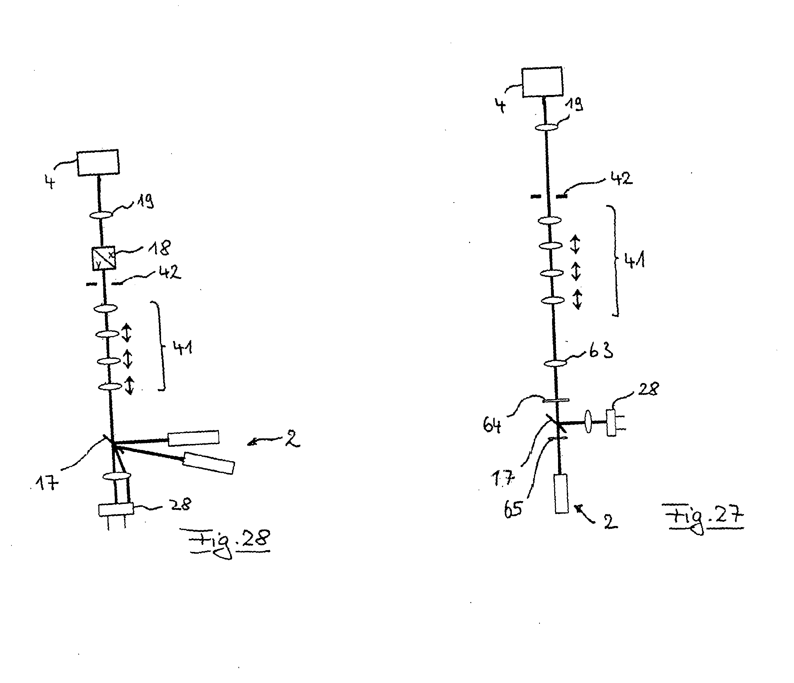

Figur 27 zeigt eine weitere mögliche Bauweise für ein Laserscanningmikroskop 1, bei dem ein Nipkowscheiben-Ansatz zur Verwirklichung kommt. Das Lichtquellenmodul 2, das in Figur 27 stark vereinfacht dargestellt ist, beleuchtet über ein Minilinsenarray 65 durch den Hauptfarbteiler 17 hindurch eine Nipkow-Scheibe 64, wie sie beispielsweise in US 6.028.306, WO 88 07695 oder DE 2360197 A1 beschrieben ist. Die über das Minilinsenarray 65 beleuchteten Pinholes der Nipkow-Scheibe werden in die im Mikroskopmodul 4 befindliche Probe abgebildet. Um auch hier die probenseitige Bildgröße variieren zu können, ist wiederum die Zoom-Optik 41 vorgesehen.

In Abwandlung zur Bauweise z. B. der Figur 2 ist beim Nipkow-Scanner die Beleuchtung im Durchgang durch den Hauptfarbteiler 17 vorgenommen und die zu detektierende Strahlung wird ausgespiegelt. Darüber hinaus ist der Detektor 28 nun ortsauflösend ausgeführt, damit die mit der Nipkow-Scheibe 46 erreichte Multipunktbeleuchtung auch entsprechend parallel abgetastet wird. Ferner ist zwischen der Nipkow-Scheibe 64 und der Zoom-Optik 41 eine geeignete feststehende Optik 63 mit positiver Brechkraft angeordnet, welche die durch die Pinholes der Nipkow-Scheibe 64 divergent austretende Strahlung in geeignete Bündeldurchmesser umwandelt. Der Hauptfarbteiler 17 ist für den Nipkow-Aufbau der Figur 11 ein klassischer dichroitischer Strahlteiler, d. h. nicht der zuvor erwähnte Strahlteiler mit schlitzförmig oder punktförmig reflektierendem Bereich.

Die Zoom-Optik 41 entspricht z. B. der zuvor erläuterten Bauweise, wobei natürlich der Scanner 18 durch die Nipkow-Scheibe 64 überflüssig wird. Er kann dennoch vorgesehen werden, wenn man die anhand Figur 10 erläuterte Auswahl eines Bereiches ROI vornehmen möchten. Gleiches gilt für das Abbe-König-Prisma.

Einen alternativen Ansatz mit Multipunktabtastung zeigt in schematischer Darstellung Figur 28, bei der mehrere Lichtquellen schräg in die Scannerpupille einstrahlen. Auch hier läßt sich durch Nutzung der Zoom-Optik 41 zur Abbildung zwischen Hauptfarbteiler 17 und Scanner 18 eine Zoomfunktion wie in Figur 26 dargestellt realisieren. Durch gleichzeitiges Einstrahlen von Lichtbündeln unter verschiedenen Winkeln in einer zur Pupille konjugierten Ebene, werden Lichtpunkte in einer zur Objektebene konjugierten Ebene erzeugt, die vom Scanner 18 gleichzeitig über einen Teilbereich des gesamten Objektfeldes geführt werden. Die Bildinformation entsteht durch Auswertung sämtlicher Teilbilder auf einem ortsauflösenden Matrixdetektor 28.

Als weitere Ausführungsform kommt eine Multipunkt-Abtastung, wie in US 6.028.306 beschrieben, in Frage, deren Offenbarung vollumfänglich diesbezüglich hier einbezogen wird. Auch hier ist, wie in Figuren 27 und 28 ein ortsauflösender Detektor 28 vorzusehen. Die Probe wird dann durch eine Multipunktlichtquelle beleuchtet, die durch einen Strahlexpander mit nachgeordneten Mikrolinsenarray realisiert wird, das eine Multiaperturenplatte so beleuchtet, daß dadurch eine Multipunktlichtquelle realisiert ist.

Die beschriebene Erfindung stellt eine bedeutende Ausweitung der Anwendungsmöglichkeiten von schnellen konfokalen Laserscanmikroskopen dar. Die Bedeutung einer solchen Weiterentwicklung lässt sich anhand der zellbiologischen Standardliteratur und den dort beschriebenen schnellen zellulären und subzellulären Vorgängen[1] und den eingesetzten Untersuchungsmethoden mit einer Vielzahl von Farbstoffen[2] ablesen. Siehe z.B.:

[1]B. Alberts et al. (2002): Molecular Biology of the Cell; Garland Science.

[1,2]G. Karp (2002): Cell and Molecular Biology: Concepts and Experiments; Wiley Text Books.

[1,2]R. Yuste et al. (2000): Imaging neurons - a laboratory Manual; Cold Spring Harbor Laboratory Press, New York.

[2]R.P. Haugland (2003): Handbook of fluorescent Probes and research Products, 10th Edition; Molecular Probes Inc. and Molecular Probes Europe BV.

De Erfindung hat insbesondere große Bedeutung für die folgenden Prozesse und Vorgange:

*Entwicklung von Organismen*

Die beschriebene Erfindung ist u.a. für die Untersuchung von Entwicklungsprozessen geeignet, die sich vor allem durch dynamische Prozesse im Zehntelsekunden bis hin zum Stundenbereich auszeichnen. Beispielanwendungen auf der Ebene von Zellverbänden und ganzen Organismen sind z.B. hier beschrieben:

■ Abdul-Karim, M.A. et al. beschreiben 2003 in Microvasc. Res., 66:113-125 eine Langzeitanalyse von Blutgefässveränderungen im lebenden Tier, wobei Fluoreszenzbilder in Intervallen über mehrere Tage aufgenommen wurde. Die 3D-Datensätze wurden mit adaptiven Algorithmen ausgewertet, um die Bewegungstrajektorien schematisch darzustellen.

■ Soll, D.R. et al. beschreiben 2003 in Scientific World Journ. 3:827-841 eine softwarebasierte Bewegungsanalyse von mikroskopischen Daten von Kernen und Pseudopodien lebender Zellen in allen 3 Raumdimensionen.

■ Grossmann, R. et al. beschreiben 2002 in Glia, 37:229-240 eine 3D-Analyse der Bewegungen von Mikrogliazellen der Ratte, wobei die Daten über bis zu 10 Stunden aufgenommen wurden. Gleichzeitig kommen nach traumatischer Schädigung auch schnelle Reaktionen der Glia vor, so dass eine hohe Datenrate und entsprechendes Datenvolumen entsteht.

Das betrifft insbesondere folgende Schwerpunkte:

- Analyse lebender Zellen in einer 3D Umgebung, deren Nachbarzellen empfindlich auf Laserbeleuchtung reagieren und die von der Beleuchtung der 3D-ROI geschützt werden müssen;
- Analyse lebender Zellen in einer 3D Umgebung mit Markierungen, die gezielt durch Laserbeleuchtung in 3D gebleicht werden sollen, z.B. FRET-Experimente;
- Analyse lebender Zellen in einer 3D Umgebung mit Markierungen, die gezielt durch Laserbeleuchtung gebleicht und gleichzeitig auch ausserhalb der ROI beobachtet werden sollen, z.B. FRAP- und FLIP-Experimente in 3D;
- Gezielte Analyse lebender Zellen in einer 3D Umgebung mit Markierungen und Pharmaka, die manipulationsbedingte Änderungen durch Laserbeleuchtung aufweisen, z.B. Aktivierung von Transmittern in 3D;
- Gezielte Analyse lebender Zellen in einer 3D Umgebung mit Markierungen, die manipulationsbedingte Farbänderungen durch Laserbeleuchtung aufweisen, z.B. paGFP, Kaede;
- Gezielte Analyse lebender Zellen in einer 3D Umgebung mit sehr schwachen Markierungen, die z.B. eine optimale Balance von Konfokalität gegen Detektionsempfindlichkeit erfordern.
- Lebende Zellen in einem 3D-Gewebeverband mit variierenden Mehrfachmarkierungen, z.B. CFP, GFP, YFP, DsRed, HcRed u.ä.
- Lebende Zellen in einem 3D-Gewebeverband mit Markierungen, die funktionsabhängige Farbänderungen aufweisen, z.B. Ca+-Marker
- Lebende Zellen in einem 3D-Gewebeverband mit Markierungen, die entwicklungsbedingte Farbänderungen aufweisen, z.B. transgene Tiere mit GFP
- Lebende Zellen in einem 3D-Gewebeverband mit Markierungen, die manipulationsbedingte Farbänderungen durch Laserbeleuchtung aufweisen, z.B. paGFP, Kaede
- Lebende Zellen in einem 3D-Gewebeverband mit sehr schwachen Markierungen, die eine Einschränkung der Konfokalität zugunsten der Detektionsempfindlichkeit erfordern.
- Letztgenannter Punkt in Kombination mit den Vorangehenden.

*Transportvorgänge in Zellen*

Die beschriebene Erfindung ist für die Untersuchung von innerzellulären Transportvorgängen exzellent geeignet, da hierbei recht kleine motile Strukturen, z.B. Proteine, mit hoher Geschwindigkeit (meist im Bereich von Hundertstelsekunden) dargestellt werden müssen. Um die Dynamik von komplexen Transportvorgängen zu erfassen, kommen oft auch Anwendungen wie FRAP mit ROI-Bleichen zum Einsatz. Beispiele für solche Studien sind z.B. hier beschrieben:

■ Umenishi, F. et al. beschreiben 2000 in Biophys J., 78:1024-1035 eine Analyse der räumlichen Beweglichkeit von Aquaporin in GFP-transfizierten Kulturzellen. Hierzu wurden in den Zellmembranen Punkte gezielt lokal gebleicht und die Diffusion der Fluoreszenz in der Umgebung analysiert.

■ Gimpl, G. et al. beschreiben 2002 in Prog. Brain Res., 139:43-55 Experimente mit ROI-Bleichen und Fluoreszenzimaging zur Analyse der Mobilität und Verteilung von GFP-markierten Oxytocin-Rezeptoren in Fibroblasten. Dabei stellen sich hohe Anforderungen an die räumliche Positionierung und Auflösung sowie die direkte zeitliche Folge von Bleichen und Imaging.

■ Zhang et al. beschreiben 2001 in Neuron, 31:261-275 live cell Imaging von GFP-transfizierten Nervenzellen, wobei die Bewegung von Granuli durch kombiniertes Bleichen und Fluoreszenzimaging analysiert wurde. Die Dynamik der Nervenzellen stellt dabei hohe Anforderungen an die Geschwindigkeit des Imaging.

*Wechselwirkungen von Molekülen*

Die beschriebene Erfindung ist insbesondere für die Darstellung molekularer und anderer subzellulärer Wechselwirkungen geeignet. Hierbei müssen sehr kleine Strukturen mit hoher Geschwindigkeit (im Bereich um die Hundertstelsekunde) dargestellt werden. Um die für die Wechselwirkung notwendige räumliche Position der Moleküle aufzulösen, sind auch indirekte Techniken wie z.B. FRET mit ROI-Bleichen einzusetzen. Beispielanwendungen sind z.B. hier beschrieben:

■ Petersen, M.A. und Dailey, M.E. beschreiben 2004 in Glia, 46:195-206 eine Zweikanalaufnahme lebender Hippokampuskulturen der Ratte, wobei die zwei Kanäle für die Marker Lectin und Sytox räumlich in 3D und über einen längeren Zeitraum aufgezeichnet werden.

■ Yamamoto, N. et al. beschreiben 2003 in Clin. Exp. Metastasis, 20:633-638 ein Zweifarbimaging von humanen fibrosarcoma Zellen, wobei grünes und rotes fluoreszentes Protein (GFP und RFP) simultan in Echtzeit beobachtet wurde.

■ Bertera, S. et al. beschreiben 2003 in Biotechniques, 35:718-722 ein Multicolorimaging von transgenen Mäusen markiert mit Timer reporter Protein, welches seine Farbe nach Synthese von grün in rot ändert. Die Bildaufnahme erfolgt als schnelle Serie 3-dimensional im Gewebe am lebenden Tier.

*Signalübertragung zwischen Zellen*

Die beschriebene Erfindung ist für die Untersuchung von meist extrem schnellen Signalübertragungsvorgängen hervorragend sehr gut geeignet. Diese meist neurophysiologischen Vorgänge stellen höchste Anforderungen an die zeitliche Auflösung, da die durch Ionen vermittelten Aktivitäten sich im Bereich von Hundertstel- bis kleiner als Tausendstelsekunden abspielen. Beispielanwendungen von Untersuchungen im Muskel- oder Nervensystem sind z.B. hier beschrieben:

■ Brum G et al. beschreiben 2000 in J Physiol. 528: 419-433 die Lokalisation von schnellen Ca+ Aktivitäten in Muskelzellen des Frosches nach Reizung mit Caffeine als Transmitter. Die Lokalisation und Mikrometer-genaue Auflösung gelang nur durch Einsatz eines schnellen, konfokalen Mikroskopes.

■ Schmidt H et al. beschreiben 2003 in J Physiol. 551:13-32 eine Analyse von Ca+ Ionen in Nervenzellfortsätzen von transgenen Mäusen. Die Untersuchung von schnellen Ca+-Transienten in Mäusen mit veränderten Ca+ bindenden Proteinen konnte nur mit hochauflösender konfokaler Mikroskopie durchgeführt werden, da auch die Lokalisation der Ca+ Aktivität innerhalb der Nervenzelle und deren genaue zeitliche Kinetik eine wichtige Rolle spielt.

**Patentansprüche**

1. Lichtrastermikroskop zur Raman- Spektroskopie zur Erfassung mindestens eines Probenbereiches durch eine Relativbewegung zwischen Beleuchtungslicht und Probe,
wobei das Beleuchtungslicht die Probe parallel in mehreren Punkten oder Bereichen beleuchtet und mehrere Punkte oder Bereiche simultan detektiert werden,
wobei mehrere beleuchtete Probenpunkte auf einer Linie liegen und mit einem ortsauflösenden Detektor mehrere Punkte gleichzeitig detektiert werden, insbesondere konfokales Laserscanningmikroskop mit

- einer Beleuchtungsanordnung (2), die einen Beleuchtungsstrahl zum Beleuchten eines Probenbereichs (23) bereitstellt,
- einer Scananordnung (3, 4), die den Beleuchtungsstrahl scannend über die Probe führt, und

   - einer Detektoranordnung (5), die über die Scananordnung (3, 4) den beleuchteten Probenbereich (23) mittels einer konfokalen Blende (26) auf mindestens eine Detektoreinheit (28) abbildet,

**dadurch gekennzeichnet, daß**
in der Detektoreinheit eine zeitlich und/ oder spektral aufgelöste Detektion des Probenlichtes erfolgt.

2. Laserscanningmikroskop nach Anspruch 1, **gekennzeichnet durch** eine Zoomoptik, die im Beleuchtungsstrahlengang (BS) des Mikroskopes (1) einem ein Objekt (23) erfassenden Objektiv (21) vorgeschaltet ist, eine Zwischenabbildung (ZB1) des Objektes realisiert und eine Eintrittspupille (EP) des Beleuchtungsstrahlenganges mit variabler Vergrößerung (v) und/oder variabler Abbildungslänge (L) in eine Austrittspupille (AP) abbildet.

3. Laserscanningmikroskop nach Anspruch 2, **dadurch gekennzeichnet, daß** in der Austrittspupille (AP) ein als Blende (42) wirkendes Element angeordnet ist, das eine von der Einstellung der Zoomoptik unabhängige Größe der Austrittspupille (AP) bewirkt, wobei die Größe der Austrittspupille (AP) vorzugsweise kleiner als die Größe der Eintrittspupille (OP) des Objektivs ist.

4. Laserscanningmikroskop nach Anspruch 2 oder 3, **gekennzeichnet durch** eine Zoomoptik, die von einer Steuereinheit angesteuert verstellbar ist, wobei die Steuereinheit in einer ersten Betriebsart eine variable Vergrößerung (v) bei konstanter Abbildungslänge (L) und in einer zweiten Betriebsart eine variable Abbildungslänge bei konstanter Vergrößerung (v) realisiert.

5. Laserscanningmikroskop nach Anspruch 2, 3 oder 4, **dadurch gekennzeichnet, daß** die Scaneinrichtung (3, 4) ein Zylinderteleskop (37) aufweist, das die Linienlänge des Beleuchtungsstrahls vergrößert und bei einem Zoomfaktor der Zoomoptik (42) kleiner Eins in den Strahlengang geschaltet ist.

6. Laserscanningmikroskop nach einem der obigen Ansprüche, **gekennzeichnet durch** eine Konvertierungseinheit (16) zur Erzeugung des linienförmigen Beleuchtungsstrahls aus einem im Querschnitt imhomogenen, insbesondere gaußförmigen Ursprungsstrahls (16.3), wobei die Konvertierungseinheit einen asphärischen, konvexen Spiegel (16.1) aufweist, der im Bereich des Auftreffpunktes des Ursprungsstrahls (16.3) stärker gekrümmt ist, als in auftreffpunktfernen Bereichen.

7. Laserscanningmikroskop nach Anspruch 6, **dadurch gekennzeichnet, daß** der Spiegel (16.1) keilförmig mit abgerundetem First (16.9) ausgebildet ist.

8. Laserscanningmikroskop nach Anspruch 6 oder 7, **dadurch gekennzeichnet, daß** die Spiegelfläche (16.6) in kartesischen, (x,y,z)-Koordinaten der Funktion $y^2 / [c + (c^2 - (1 - Q)y^2)^{1/2}]$ genügt, wobei c ein Krümmungsradius des Firstes (16.9) und Q eine konische Konstante ist.

9. Laserscanningmikroskop nach Anspruch 7, **dadurch gekennzeichnet, daß** die Spiegelfläche zusätzlich entlang der Längsachse des Firstes (16.9) gekrümmt ist.

10. Laserscanningmikroskop nach Anspruch 8 oder 9, **dadurch gekennzeichnet, daß** der asphärische Spiegel (16.1) der Funktion $f(x,y) = [(a(y)-r_x)^2 - x^2]^{1/2} - r_x$ genügt, wobei $r_x$ der Krümmungsradius entlang der Längsachse des Firstes (16.9) und a(y) die Funktion des Anspruchs 8 ist.

11. Laserscanningmikroskop nach einem der Ansprüche 6 bis 10, **dadurch gekennzeichnet, daß** eine Symmetrieachse des Spiegels (16.1) unter einem Winkel von 4° bis 20° zur Einfallsachse (OA) des Ursprungsstrahles (16.3) liegt.

12. Laserscanningmikroskop nach einem der Ansprüche 6 bis 11, **dadurch gekennzeichnet, daß** dem asphärischen Spiegel (16.1) ein Sammelspiegel (16.2) nachgeordnet ist.

13. Laserscanningmikroskop nach Anspruch 10, **dadurch gekennzeichnet, daß** der Sammelspiegel (16.2) zylindrisch oder torisch ist.

**14.** Laserscanningmikroskop nach Anspruch 10 oder 13, **dadurch gekennzeichnet, daß** der Sammelspiegel (16.1) in x-Richtung einen Krümmungsradius gleich ($r_x + 2 \cdot d$) aufweist, wobei d der Abstand zwischen asphärischem Spiegel (16.1) und Sammelspiegel (16.2) ist.

**15.** Laserscanningmikroskop nach einem der obigen Ansprüche, **dadurch gekennzeichnet, daß** die Scananordnung zwei unabhängig steuerbare und wirkende Scaneinrichtungen aufweist, von denen eine eine dezentrale Zoom-Funktion bewirkt.

**16.** Laserscanningmikroskop nach einem der obigen Ansprüche, **dadurch gekennzeichnet, daß** die Detektoreinheit einen ortsauflösenden Flächenstrahlungssensor (28) umfaßt, der in der konfokalen Ebene angeordnet ist, wobei die Auswahl eines Teilbereiches des Flächenstrahlungssensors (28) als konfokale Schlitzblende wirkt.

**17.** Laserscanningmikroskop nach einem der obigen Ansprüche, **dadurch gekennzeichnet, daß** die Detektoreinheit ein Spektrometer (49) aufweist, das die linienförmige Strahlung quer zur Linie spektral aufteilt und auf einen Flächenstrahlungsdetektor (50) leitet.

**18.** Laserscanningmikroskop nach einem der obigen Ansprüche, **dadurch gekennzeichnet, daß** das Spektrometer (49) einen Eintrittsspalt (48) aufweist, der als konfokale Blende dient.

**19.** Laserscanningmikroskop nach einem der obigen Ansprüche, **dadurch gekennzeichnet, daß** die Detektoreinheit eine Streak-Kamera aufweist, die die linienförmige Strahlung quer zur Linie zeitlich aufteilt und auf einen Flächenstrahlungsdetektor leitet.

**20.** Laserscanningmikroskop nach einem der obigen Ansprüche, **gekennzeichnet durch** mindestens einen Polarisator (45, 46) in der Beleuchtungsanordnung (2) und mindestens einen Polarisationsanalysator (47) in der Detektoranordnung (5).

**21.** Laserscanningmikroskop nach einem der obigen Ansprüche, **dadurch gekennzeichnet, daß** die Detektoranordnung (5) mehrere spektrale Kanäle aufweist, die jeweils eine Detektoreinheit (28, 28a) umfassen.

**22.** Laserscanningmikroskop nach Anspruch 21, **dadurch gekennzeichnet, daß** allen spektralen Kanälen eine gemeinsame Schlitzblende (26) vorgeordnet ist.

**23.** Laserscanningmikroskop nach einem der obigen Ansprüche, **gekennzeichnet durch** eine hinsichtlich der Schlitzbreite verstellbare Schlitzblende (26) oder **durch** eine Schlitzblendeneinheit mit mehreren austauschbaren Schlitzblenden unterschiedlicher Schlitzbreite.

**24.** Laserscanningmikroskop nach einem der obigen Ansprüche, **gekennzeichnet durch** eine in der Beleuchtungsanordnung (2) und/oder der Detektoranordnung (5) vorgesehene Korrektur-Vorrichtung mit mindestens einer planparallelen transparenten Platte (40, 9), die in einer Halterung (40, 11) im Strahlengang gehalten ist und **durch** diese in einer Kipp- und/oder Schwenkbewegung um mindestens eine Achse antreibbar ist, um **durch** Veränderung der Kipplage der Platte (40, 9) einen bestimmten Parallelversatz (dx, dy) der Strahlen im Strahlengang einzustellen.

**25.** Laserscanningmikroskop nach Anspruch 24, **gekennzeichnet durch** mindestens eine zweiachsig kipp- und/oder schwenkbare Platte (40, 9) oder mindestens zwei unterschiedlich einachsig kipp- oder schwenkbare Platten.

**26.** Laserscanningmikroskop nach einem der Ansprüche 24 oder 25, **gekennzeichnet durch** eine Stelleinrichtung, die mindestens einen Betriebsparameter erfaßt und die Kipplage abhängig vom Wert des Betriebsparameters einstellt.

**27.** Laserscanningmikroskop nach einem der Ansprüche 24 - 26, **gekennzeichnet durch** einen Regelkreis, der die Kipplage der Platte (40, 9) als Stellgröße verwendet.

**28.** Laserscanningmikroskop nach einem der Ansprüche 24 - 27, **gekennzeichnet durch** zwei unabhängig antreibbare Platten (40, 9) aus Materialien unterschiedlicher Dispersion, um einen farbunabhängigen oder gezielt farbabhängigen Parallelversatz einzustellen.

**29.** Laserscanningmikroskop nach einem der Ansprüche 24 - 28, **dadurch gekennzeichnet, daß** mindestens eine Platte (40, 9) aus zwei Teilplatten (40, 9a, 40, 9b) mit Materialen unterschiedlicher Dispersion aufgebaut ist, um Farbquerfehler im Strahlengang zu kompensieren.

**30.** Laserscanningmikroskop nach einem der Ansprüche 24 - 29, **dadurch gekennzeichnet, daß** die Platte (40, 9) im Strahlengang der Detektoreinheit (28) vorgeordnet ist, um die Abbildung des Probenbereiches (23) auf die Detektoreinheit (28) oder eine Abbildung der Schlitzblende (26) auf die Detektoreinheit (28) zu zentrieren.

**31.** Laserscanningmikroskop nach Anspruch 26, **dadurch gekennzeichnet, daß** das Mikroskop im Strahlengang wechsel- oder verstellbare Elemente aufweist und die Stelleinrichtung eine Konfiguration der wechsel- oder verstellbaren Elemente als Betriebsparameter erfaßt.

**32.** Laserscanningmikroskop nach Anspruch 26, **dadurch gekennzeichnet, daß** die Detektoranordnung (28, 28a) Strahlung unterschiedlicher Wellenlänge analysiert und die Stelleinrichtung die Wellenlänge im Strahlengang als Betriebsparameter erfaßt.

**33.** Laserscanningmikroskop nach Anspruch 27, **dadurch gekennzeichnet, daß** der Regelkreis die Strahlungsintensität an der Detektoreinheit (28) maximiert und/oder einen Bildversatz minimiert.

**34.** Laserscanningmikroskop nach einem der Ansprüche 24 bis 33, **dadurch gekennzeichnet, daß** sowohl zwischen Probenbereich (23) und konfokaler Blende (26) als auch zwischen Blende (26) und Detektoreinheit (28), eine zweiachsig kipp- und/oder schwenkbare Platte (40, 9) oder zwei unterschiedlich einachsig kipp- und/oder schwenkbare Platten vorgesehen sind.

**35.** Verfahren zur Laserscanningmikroskopie, **dadurch gekennzeichnet**, da ein konfokales Laserscanningmikroskop (1) gemäß einem der Ansprüche 1-34 verwendet wird und daß die Probe analysiert wird mittels Raman-Spektroskopie, insbesondere mittels kohärenter Stokes'scher oder anti-Stokes'scher oder Hyper-Raman- oder stimulierter Ramanspektroskopie oder Raman-Prozessen höherer Ordnung.

**36.** Verwendung von Anordnungen und/ oder Verfahren nach mindestens einem der vorangehenden Ansprüche zur Untersuchung von Entwicklungsprozessen , insbesondere dynamischer Prozesse im Zehntelsekunden bis hin zum Stundenbereich, insbesondere auf der Ebene von Zellverbänden und ganzen Organismen, insbesondere nach mindestens einem der folgenden Punkte:

• Analyse lebender Zellen in einer 3D Umgebung, deren Nachbarzellen empfindlich auf Laserbeleuchtung reagieren und die von der Beleuchtung der 3D-ROI geschützt werden müssen;
• Analyse lebender Zellen in einer 3D Umgebung mit Markierungen, die gezielt durch Laserbeleuchtung in 3D gebleicht werden sollen, z.B. FRET-Experimente;
• Analyse lebender Zellen in einer 3D Umgebung mit Markierungen, die gezielt durch Laserbeleuchtung gebleicht und gleichzeitig auch ausserhalb der ROI beobachtet werden sollen, z.B. FRAP- und FLIP-Experimente in 3D;
• Gezielte Analyse lebender Zellen in einer 3D Umgebung mit Markierungen und Pharmaka, die manipulationsbedingte Änderungen durch Laserbeleuchtung aufweisen, z.B. Aktivierung von Transmittern in 3D;
• Gezielte Analyse lebender Zellen in einer 3D Umgebung mit Markierungen, die manipulationsbedingte Farbänderungen durch Laserbeleuchtung aufweisen, z.B. paGFP, Kaede;
• Gezielte Analyse lebender Zellen in einer 3D Umgebung mit sehr schwachen Markierungen, die z.B. eine optimale Balance von Konfokalität gegen Detektionsempfindlichkeit erfordern.
• Lebende Zellen in einem 3D-Gewebeverband mit variierenden Mehrfachmarkierungen, z.B. CFP, GFP, YFP, DsRed, HcRed u.ä.
• Lebende Zellen in einem 3D-Gewebeverband mit Markierungen, die funktionsabhängige Farbänderungen aufweisen, z.B. Ca+-Marker
• Lebende Zellen in einem 3D-Gewebeverband mit Markierungen, die entwicklungsbedingte Farbänderungen aufweisen, z.B. transgene Tiere mit GFP
• Lebende Zellen in einem 3D-Gewebeverband mit Markierungen, die manipulationsbedingte Farbänderungen durch Laserbeleuchtung aufweisen, z.B. paGFP, Kaede
• Lebende Zellen in einem 3D-Gewebeverband mit sehr schwachen Markierungen, die eine Einschränkung der Konfokalität zugunsten der Detektionsempfindlichkeit erfordern.
• Letztgenannter Punkt in Kombination mit den Vorangehenden.

**37.** Verwendung von Anordnungen und/ oder Verfahren nach mindestens einem der vorangehenden Ansprüche für die Untersuchung von innerzellulären Transportvorgängen , insbesondere zur Darstellung kleine motile Strukturen, z.B. Proteine, mit hoher Geschwindigkeit (meist im Bereich von Hundertstelsekunden) insbesondere für Anwendungen wie FRAP mit ROI-Bleichen

**38.** Verwendung von Anordnungen und/ oder Verfahren nach mindestens einem der vorangehenden Ansprüche für die Darstellung molekularer und anderer subzellulärer Wechselwirkungen ,insbesondere der Darstellung sehr kleine Strukturen mit hoher Geschwindigkeit vorzugsweise unter Verwendung indirekter Techniken wie z.B. FRET mit ROI-Bleichen zur Auflösung submolekularar Strukturen

**39.** Verwendung von Anordnungen und/ oder Verfahren nach mindestens einem der vorangehenden Ansprüche schnellen Signalübertragungsvorgängen , insbesondere neurophysiologischen Vorgängen mit hoher zeitlicher Auflösung, da die durch Ionen vermittelten Aktivitäten sich im Bereich von Hundertstel- bis kleiner als Tausendstelsekunden abspielen, insbesondere bei Untersuchungen im Muskel- oder Nervensystem

Fig. 1

EP 1 617 205 A1

Fig.2

Fig.3

Fig.4

Fig. 5

Fig. 6

38.14

Fig. 7

5

44

40

26

27

OA

39

40

26

27

25

23

39

C

43

Fig.8

26

43

dx

dy

Fig.9

40a 9a

40b
9b

E

A

40g

Fig.10

Fig. 11

Fig. 12

Fig. 13

Fig. 14

Fig. 15

5

3

48

17

18

50

26

41

49

38

2

Fig.16

51

X1
X2
X3

52

X

53

λ

Fig.17

EP 1 617 205 A1

Fig. 18

Fig. 19

O    z(G4)      z(G3) z(G2)      z(G1) z(AP)   Z

EP

G4      G3   G2      G1   AP    19

*Fig. 20a*

*Fig. 20b*

L

EP

G4      G3    G2      G1   AP    19

*Fig. 21a*

*Fig. 21b*

EP

G4      G3    G2   G1   AP    19

*Fig. 22a*

*Fig. 22b*

Fig.23

Fig.24

Fig.25

Fig.26

Fig. 27

Fig. 28

Europäisches
Patentamt

# EUROPÄISCHER RECHERCHENBERICHT

Nummer der Anmeldung

EP 04 02 3511

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 6 028 306 A (HAYASHI SHINICHI) 22. Februar 2000 (2000-02-22) * Spalte 14, Zeilen 10-67 * * Spalte 17, Zeile 43 - Spalte 18, Zeile 19 * * Abbildung 7 * | 1,2 | G01N21/64 G02B21/00 G02B21/16 G01J3/44 |
| X | WO 03/098200 A (EVOTEC AG ; STANGE ROLAND (DE); KIRSCH ACHIM (DE); MUELLER JUERGEN (DE) 27. November 2003 (2003-11-27) * Zusammenfassung * * Seite 4, Absatz 4 - Seite 5, Absatz 2 * * Seite 7, Absatz 4 - Seite 8, Absatz 3 * * Seite 9, Absatz 2 - Seite 11, Absatz 1 * * Seite 11, Absatz 3 * * Seite 14, Absatz 3 - Seite 15, Absatz 1 * * Seite 16, Absatz 3 - Seite 17, Absatz 1 * | 1,16-18, 20-23 | |
| X | US 5 192 980 A (DIXON ARTHUR E ET AL) 9. März 1993 (1993-03-09) * Spalte 7, Zeilen 3-40; Abbildungen 3,7 * | 1,18, 35-39 | RECHERCHIERTE SACHGEBIETE (Int.Cl.7) G01N G02B G01J |
| X | US 6 388 788 B1 (KARSH WILLIAM ET AL) 14. Mai 2002 (2002-05-14) * Spalte 9, Zeile 62 - Spalte 10, Zeile 26 * * Spalte 10, Zeile 43 - Spalte 11, Zeile 3 * * Abbildung 6 * | 1,16 | |
| D,A | US 6 134 002 A (STIMSON MICHAEL J ET AL) 17. Oktober 2000 (2000-10-17) * Spalte 5, Zeilen 52-59 * * Spalte 6, Zeilen 61-64 * * Spalte 8, Zeilen 65-67 * * Abbildungen * | 1 | |

-/--

~~Der vorliegende Recherchenbericht wurde für alle Patentan~~sprüche erstellt

| Recherchenort | Abschlußdatum der Recherche | Prüfer |
|---|---|---|
| Den Haag | 20. Januar 2005 | Mollenhauer, R |

EPO FORM 1503 03.82 (P04C03)

**Europäisches Patentamt**

# EUROPÄISCHER RECHERCHENBERICHT

**Nummer der Anmeldung**

EP 04 02 3511

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,A | DE 197 02 753 A (ZEISS CARL JENA GMBH) 30. Juli 1998 (1998-07-30) * das ganze Dokument * | 1 | |
| D,A | WO 92/22793 A (RENISHAW TRANSDUCER SYST) 23. Dezember 1992 (1992-12-23) * Seite 5, Zeile 29 - Seite 6, Zeile 13 * * Seite 7, Zeile 36 - Seite 8, Zeile 9 * * Seite 7, Zeilen 1-3 * | 1 | |

RECHERCHIERTE SACHGEBIETE (Int.Cl.7)

~~Der vorliegende Recherchenbericht wurde für alle Patentan~~sprüche erstellt

| Recherchenort | Abschlußdatum der Recherche | Prüfer |
|---|---|---|
| Den Haag | 20. Januar 2005 | Mollenhauer, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................

& : Mitglied der gleichen Patentfamilie, übereinstimmendes Dokument

EPO FORM 1503 03.82 (P04C03)

**Europäisches**
**Patentamt**

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1-3, 16-23, 35-39

**Europäisches Patentamt**

**MANGELNDE EINHEITLICHKEIT DER ERFINDUNG ERGÄNZUNGSBLATT B**

**Nummer der Anmeldung**

**EP 04 02 3511**

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-3,16-23,35-39

   Laserscanningmikroskop nach Anspruch 2, dadurch gekennzeichnet, dass in der Austrittspupille ein als Blende wirkendes Element angeordnet ist, das eine von der Einstellung der Zoomoptik unabhängige Grösse der Austrittspupille bewirkt.

   ---

2. Anspruch: 4

   Laserscanningmikroskop nach Anspruch 2, gekennzeichnet durch eine Zoomoptik, die von einer Steuereinheit angesteuert verstellbar ist, wobei die Steuereinheit in einer ersten Betriebsart eine variable Vergrösserung bei konstanter Abbildungslänge und in einer zweiten Betriebsart eine variable Abbildungslänge bei konstanter Vergrösserung realisiert.

   ---

3. Anspruch: 5

   Laserscanningmikroskop nach Anspruch 2, dadurch gekennzeichnet, dass die Scaneinrichtung ein Zylinderteleskop aufweist, das die Linienlänge des Beleuchtungsstrahls vergrössert und bei einem Zoomfaktor der Zoomoptik kleiner Eins in den Strahlengang geschaltet ist.

   ---

4. Ansprüche: 6-14

   Laserscanningmikroskop nach Anspruch 1, gekennzeichnet durch eine Konvertierungseinheit zur Erzeugung des linienförmigen Beleuchtungsstrahls aus einem im Querschnitt imhomogenen, insbesondere gaussförmigen Ursprungsstrahls, wobei die Konvertierungseinheit einen asphärischen, konvexen Spiegel aufweist, der im Bereich des Auftreffpunktes des Ursprungsstrahls stärker gekrümmt ist, als in auftreffpunktfernen Bereichen.

   ---

5. Anspruch: 15

   Laserscanningmikroskop nach Anspruch 1, dadurch gekennzeichnet, dass die Scananordnung zwei unabhängig steuerbare und wirkende Scaneinrichtungen aufweist, von denen eine eine dezentrale Zoom-Funktion bewirkt.

   ---

6. Ansprüche: 24-34

**Europäisches**
**Patentamt**

**MANGELNDE EINHEITLICHKEIT**
**DER ERFINDUNG**
**ERGÄNZUNGSBLATT B**

**Nummer der Anmeldung**

**EP 04 02 3511**

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Laserscanningmikroskop nach Anspruch 1, gekennzeichnet durch eine in der Beleuchtungsanordnung und/oder der Detektoranordnung vorgesehene Korrektur-Vorrichtung mit mindestens einer planparallelen transparenten Platte, die in einer Halterung im Strahlengang gehalten ist und durch diese in einer Kipp- und/oder Schwenkbewegung um mindestens eine Achse antreibbar ist, um durch Veränderung der Kipplage der Platte einen bestimmten Parallelversatz der Strahlen im Strahlengang einzustellen.

---

EP 1 617 205 A1

## ANHANG ZUM EUROPÄISCHEN RECHERCHENBERICHT
## ÜBER DIE EUROPÄISCHE PATENTANMELDUNG NR.

EP 04 02 3511

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-01-2005

| Im Recherchenbericht angeführtes Patentdokument | Datum der Veröffentlichung | Mitglied(er) der Patentfamilie | Datum der Veröffentlichung |
|---|---|---|---|
| US 6028306 A | 22-02-2000 | JP 10311950 A | 24-11-1998 |
| WO 03098200 A | 27-11-2003 | DE 10221564 A1 | 27-11-2003 |
| | | AU 2003232778 A1 | 02-12-2003 |
| | | WO 03098200 A1 | 27-11-2003 |
| | | EP 1504251 A1 | 09-02-2005 |
| US 5192980 A | 09-03-1993 | KEINE | |
| US 6388788 B1 | 14-05-2002 | US 6400487 B1 | 04-06-2002 |
| | | US 2003036855 A1 | 20-02-2003 |
| | | AU 758571 B2 | 27-03-2003 |
| | | AU 3354799 A | 11-10-1999 |
| | | BR 9908767 A | 16-10-2001 |
| | | CA 2324262 A1 | 23-09-1999 |
| | | EP 1064579 A1 | 03-01-2001 |
| | | JP 2002507762 T | 12-03-2002 |
| | | NO 20004601 A | 10-11-2000 |
| | | CN 1301357 A | 27-06-2001 |
| | | WO 9947963 A1 | 23-09-1999 |
| US 6134002 A | 17-10-2000 | AU 2845500 A | 01-08-2000 |
| | | CA 2368156 A1 | 20-07-2000 |
| | | EP 1117987 A2 | 25-07-2001 |
| | | WO 0042417 A1 | 20-07-2000 |
| DE 19702753 A | 30-07-1998 | DE 19702753 A1 | 30-07-1998 |
| | | DE 19758744 C2 | 07-08-2003 |
| | | DE 19758745 C2 | 14-08-2003 |
| | | DE 19758746 C2 | 31-07-2003 |
| | | DE 19758748 C2 | 31-07-2003 |
| | | US 6167173 A | 26-12-2000 |
| | | US 6563632 B1 | 13-05-2003 |
| | | US 6486458 B1 | 26-11-2002 |
| | | US 6631226 B1 | 07-10-2003 |
| WO 9222793 A | 23-12-1992 | DE 69203830 D1 | 07-09-1995 |
| | | DE 69203830 T2 | 23-11-1995 |
| | | EP 0542962 A1 | 26-05-1993 |
| | | WO 9222805 A1 | 23-12-1992 |
| | | WO 9222793 A1 | 23-12-1992 |
| | | JP 3377209 B2 | 17-02-2003 |
| | | JP 6500637 T | 20-01-1994 |
| | | US 5510894 A | 23-04-1996 |
| | | ZA 9204145 A | 31-03-1993 |

Für nähere Einzelheiten zu diesem Anhang : siehe Amtsblatt des Europäischen Patentamts, Nr.12/82

49